(19) Europäisches Patentamt
European Patent Office
Office européen des brevets

(11) EP 1 088 256 B1

(12) EUROPÄISCHE PATENTSCHRIFT

(45) Veröffentlichungstag und Bekanntmachung des Hinweises auf die Patenterteilung:
**11.02.2009 Patentblatt 2009/07**

(21) Anmeldenummer: **99927785.8**

(22) Anmeldetag: **28.05.1999**

(51) Int Cl.:
***G02F 1/153*** (2006.01) ***G02F 1/155*** (2006.01)

(86) Internationale Anmeldenummer:
**PCT/EP1999/003703**

(87) Internationale Veröffentlichungsnummer:
**WO 1999/064926 (16.12.1999 Gazette 1999/50)**

# (54) ELEKTROCHROME ANZEIGEVORRICHTUNG MIT VOM ELEKTROCHOMEN MEDIUM ISOLIERTEN ZULEITUNGEN

ELECTROCHROMIC DISPLAY DEVICE WITH SUPPLY LINES INSULATED FROM THE ELECTROCHROMIC MEDIUM

DISPOSITIF D'AFFICHAGE ELECTROCHROME A LIGNES D'ALIMENTATION ISOLEES PAR UN MILIEU ELECTROCHROME

(84) Benannte Vertragsstaaten:
**AT CH DE ES FR GB IE IT LI NL SE**

(30) Priorität: **06.06.1998 DE 19825371**

(43) Veröffentlichungstag der Anmeldung:
**04.04.2001 Patentblatt 2001/14**

(73) Patentinhaber: **Bayer Innovation GmbH**
**40225 Düsseldorf (DE)**

(72) Erfinder:
- **BERNETH, Horst**
**D-51373 Leverkusen (DE)**
- **CLAUSSEN, Uwe**
**D-51379 Leverkusen (DE)**
- **NEIGL, Ralf**
**D-51373 Leverkusen (DE)**
- **HAARER, Dietrich**
**D-95448 Bayreuth (DE)**
- **SCHMIDT, Stephan, C.**
**D-51469 Bergisch Gladbach (DE)**
- **JACOBSEN, Wolfgang**
**F-40600 Biscarosse (FR)**

(74) Vertreter: **Lütjens, Henning et al**
**Bayer Business Services GmbH**
**Law and Patents**
**Patents and Licensing**
**51368 Leverkusen (DE)**

(56) Entgegenhaltungen:
**EP-A- 0 240 226**
**US-A- 4 086 003**
**US-A- 4 188 095**

- **PATENT ABSTRACTS OF JAPAN vol. 008, no. 134 (C-230), 21. Juni 1984 (1984-06-21) -& JP 59 044380 A (HITACHI SEISAKUSHO KK;OTHERS: 01), 12. März 1984 (1984-03-12)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 088 256 B1

**Beschreibung**

Gegenstand der Erfindung ist eine elektrochrome Anzeigevorrichtung mit einzeln kontaktierten Anzeigesegmenten, deren elektrische Zuleitungen vom elektrochromen Medium isoliert sind. Gegenstand der Erfindung ist weiterhin ein Verfahren zur Herstellung einer solchen Anzeigevorrichtung.

Elektrochrome Vorrichtungen, die ein elektrochromes System enthalten, sind bereits bekannt. Elektrochrome Systeme verändern unter dem Einfluß eines elektrischen Feldes ihre spektrale Absorption.

In WO-A 94/23333 werden elektrochrome Materialien verschiedener Bauweise gegenübergestellt, die aber nicht als Anzeigevorrichtungen verwendet werden:

| | |
|---|---|
| Bauweise a: | Die elektrochromen Substanzen liegen als Film oder Schicht fest auf den Elektroden (vgl. D. Theis in Ullmann's Encyclopedia of Industrial Chemistry, Vol. A8. S. 622, Verlag Chemie 1987) |
| Bauweise b: | Die elektrochromen Substanzen werden beim Redoxprozeß auf den Elektroden als Schicht abgeschieden (vgl. Ullmann, s.o.). |
| Bauweise c: | Die elektrochromen Substanzen bleiben permanent in Lösung. |

Für Bauweise a) ist als elektrochromes Material das Paar Wolframoxid/Palladiumhydrid das bekannteste.

Für Bauweise b) sind Viologene als elektrochrome Substanzen beschrieben worden. Diese Vorrichtungen sind nicht selbstlöschend, das erzeugte Bild bleibt also nach dem Abschalten der Spannung bestehen und kann nur durch Umpolen der Spannung wieder gelöscht werden. Solche Vorrichtungen sind nicht besonders beständig und erlauben keine hohe Zahl an Schaltzyklen.

Zudem sind insbesondere solche mit Wolframoxid/Palladiumhydrid aufgebauten Zellen wegen der Lichtstreuung an diesen elektrochromen Schichten nicht im durchfallenden Licht zu betreiben, sondern lediglich reflektiv.

Aus Elektrokhimiya, 13, 32-37 (1977), 13, 404-408, 14, 319-322 (1978), US-A 4 902 108 und US-A 5 140 455 ist ein elektrochromes System dieser letztgenannten Bauweise c) bekannt. In einer elektrochromen Zelle, die aus leitfähig beschichteten Glasplatten aufgebaut ist, ist eine Lösung eines Paares elektrochromer Substanzen in einem inerten Lösungsmittel enthalten.

Als Paar von elektrochromen Substanzen wird je eine elektrochemisch reversibel reduzierbare und eine reversibel oxidierbare Substanz verwendet. Beide sind im Grundzustand farblos oder nur schwach gefärbt. Unter Einfluß einer elektrischen Spannung wird die eine Substanz reduziert, die andere oxidiert, wobei beide farbig werden. Nach Abschalten der Spannung bildet sich bei beiden Substanzen der Grundzustand wieder zurück, wobei Entfärbung bzw. Farbaufhellung auftritt.

$$\underset{\text{(farblos) (Niederenergiepaar)}}{RED_1 + OX_2} \rightleftharpoons \underset{\text{(farbig) (Hochenergiepaar)}}{OX_1 + RED_2}$$

Aus US-A 4 902 108 ist bekannt, daß solche Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzt.

Gemäß WO-A 94/23333 haben derartige Lösungssysteme der Bauweise c) jedoch gravierende Nachteile.

Die Diffusion der elektrochromen Substanzen in der Lösung bedingt unscharfe Farbgrenzen und verursacht einen hohen Stromverbrauch zur Aufrechterhaltung des gefärbten Zustandes, da die gefärbten Substanzen durch Rekombination und Reaktion an der jeweils gegenüberliegenden Elektrode permanent abgebaut werden.

Dennoch sind für solche elektrochromen Zellen der Bauweise c) verschiedene Anwendungen beschrieben worden. So können sie beispielsweise als Automobilrückspiegel ausgebildet sein, der bei Nachtfahrt durch Anlegen einer Spannung abgedunkelt werden kann und somit das Blenden durch Scheinwerfer nachfolgender Fahrzeuge verhindert (vgl. z. B. US-A 3 280 701, US-A 4 902 108, EP-A 0 435 689). Weiterhin können solche Zellen auch in Fensterscheiben oder Auto-Sonnendächern eingesetzt werden, wo sie nach Anlegen einer Spannung das Sonnenlicht abdunkeln. Ebenfalls beschrieben ist die Anwendung solcher Vorrichtungen als elektrochrome Anzeigevorrichtungen, beispielsweise in Segment- oder Matrix-Displays mit strukturierten Elektroden (DE 196 31 728).

Elektrochrome Vorrichtungen bestehen aus einem Paar Glas- oder Kunststoffscheiben, die jeweils auf einer Seite mit einer elektrisch leitfähigen Beschichtung z.B. Indium-Zinn-Oxid (ITO) versehen sind. Mindestens eine dieser

Scheiben ist transparent. Im Falle eines Autospiegels ist eine der Scheiben verspiegelt. Aus diesen Scheiben wird eine Zelle aufgebaut, indem sie mit ihrer einander zugewandten elektrisch leitfähig beschichteten Seite mit einem ringförmigen oder rechteckigen Dichtungsring verbunden, vorzugsweise verklebt werden. Der Dichtungsring stellt einen gleichmäßigen Abstand zwischen den Scheiben her, von beispielsweise 0,01 bis 0,5 mm. Diese Zelle ist mit einem elektrochromen Medium befüllt. Über die elektrisch leitfähigen Schichten lassen sich die beiden Scheiben getrennt kontaktieren.

Bei elektrochromen Anzeigevorrichtungen ist mindestens eine der beiden elektrisch leitfähigen Schichten in einzeln kontaktierte Flächensegmente aufgeteilt, die voneiner elektrisch isoliert sind. Die Kontaktierung dieser Flächensegmente erfolgt über elektrische Leitungen, die jede zu einer Kante der zugehörigen Scheibe führen und dort beispielsweise über Klemmen, Lötstellen, Leitlack oder andere elektrisch leitende Verbindungen an eine Stromquelle angeschlossen sind.

Beim Betrieb der elektrochromen Vorrichtung liegt an ausgewählten Flächensegmenten eine Spannung zwischen den elektrisch leitfähig beschichteten Scheiben an, so daß die gewünschte Information durch Färbung des elektrochromen Mediums dargestellt wird. Die Spannung liegt aber gleichermaßen an den Zuleitungen an, mit der Folge, daß auch an diesen eine elektrochrome Reaktion stattfindet und die Zuleitungen sich ebenfalls einfärben. Dies ist unerwünscht, da das durch die Flächensegmente vorgegebene Bild dadurch erheblich gestört wird.

Die US 4,086,003 und die US4,188,095 beziehen sich auf elektrochrome Vorrichtungen bei denen die elektrischen Zuleitungen zu den Flächensegmenten von dem elektrochromen Medium isoliert sind und bei denen die elektronischen Zuleitungen zu den Flächensegmenten mit einer elektrisch isolierenden Schicht überzogen sind. Beide Offenlegungsschriften offenbaren nicht, dass für die elektrischen Zuleitungen als elektrisch isolierende Schicht eine organische, makromolekulare Verbindung oder wenn die Zuleitungen aus Metall bestehen, als elektrisch isolierende schicht, das Oxid des Metalls verwendet werden kann.

Aufgabe der Erfindung war die Herstellung einer elektrochromen Anzeigevorrichtung mit einzeln kontaktierten Flächensegmenten, bei der die Stromzuleitungen zu den kontaktierten Flächensegmenten keine Farbreaktion verursachen.

Die Lösung der erfindungsgemäßen Aufgabe ist eine elektrochrome Anzeigevorrichtung, enthaltend ein Paar Glas- oder Kunststoffplatten oder Kunststoffolien, von denen mindestens eine Platte oder Folie, vorzugsweise beide Platten oder Folien, auf jeweils einer Seite mit einer elektrisch leitfähigen Beschichtung versehen sind und von denen wenigstens eine Platte oder Folie und ihre leitfähige Beschichtung transparent sind und von denen die andere verspiegelt sein kann, und von denen wenigstens bei einer der beiden Platten oder Folien die elektrisch leitfähige Schicht in getrennte, einzeln kontaktierte Flächensegmente, die jeweils eine elektrische Zuleitung von einer Kante der zugehörigen Platte oder Folie aufweisen, aufgeteilt ist, wobei die Platten oder Folien über einen Dichtungsring auf den Seiten ihrer leitfähigen Beschichtung zusammengefügt sind, das Volumen, gebildet aus den beiden Platten oder Folien und dem Dichtungsring, mit einem elektrochromen Medium gefüllt ist, die elektrischen Zuleitungen zu den Flächensegmenten von dem elektrochromen Medium elektrisch isoliert sind und die elektrischen Zuleitungen zu den Flächensegmenten mit einer elektrisch isolierenden Schicht überzogen sind, dadurch gekennzeichnet, daß als elektrisch isolierende Schicht eine organische, makromolekulare Verbindung oder, wenn die Zuleitungen aus Metall bestehen, als elektrisch isolierende Schicht das Oxid des Metalls verwendet wird.

Die Aufteilung in Flächensegmente kann je nach den Anforderungen an die Anzeigevorrichtung in verschiedener Weise erfolgen. Beispielsweise kann nur ein einzelnes Flächensegment vorhanden sein, wenn z. B. nur ein Zeichen, Symbol usw. dargestellt werden soll. Es können aber auch mehrere Flächensegmente vorhanden sein. Form und Anzahl der Flächensegmente sind dann so gestaltet, daß durch Kombination verschiedenener Flächensegmente alle gewünschten Anzeigeformen dargestellt werden können, z.B. Buchstaben, Ziffern, Symbole, Wörter, Zahlen oder Kombinationen daraus. Das Flächensegment kann also die Form des Zeichens selber haben, aber auch die Form eines Rechtecks, Quadrats, Vielecks, Kreises, Ovals und/oder anderer flächiger geometrischer Figuren oder Kombinationen daraus.

Vorzugsweise ist die elektrisch isolierende Schicht transparent.

Geeignete, vorzugsweise transparente Materialien für die elektrisch leitfähige Beschichtung sind beispielsweise Indium-Zinn-Oxid (ITO), Antimon- oder Fluor-dotiertes Zinnoxid, Antimon- oder Aluminiumdotiertes Zinkoxid, Zinnoxid oder leitfähige organische Polymere wie beispielsweise gegebenenfalls substituierte Polythienyle, Polypyrrole, Polyaniline, Polyacetylen. Man erhält so eine transmissive elektrochrome Vorrichtung, die im durchfallenden Licht betrachtet werden kann.

Eine der Platten oder Folien kann aber auch metallisch, vorzugsweise nicht transparent, elektrisch leitfähig beschichtet sein. Geeignete Materialien sind Kupfer, Silber, Gold, Chrom, Aluminium, Palladium oder Rhodium oder auch Palladium auf Chrom oder Rhodium auf Chrom oder auch andere Metallkombinationen. Man erhält so in der Regel eine reflektierende elektrochrome Vorrichtung.

Um eine einheitlich reflektierende Anzeigevorrichtung zu erhalten, geht man vorteilhaft von einer schichtförmig aufgebauten leitfähig beschichteten, reflektierenden Platte aus. Auf die Platte oder Folie wird eine metallische Verspiegelung gleichmäßig aufgebracht, beispielsweise aus einem der oben genannten Metalle oder deren Kombinationen. Auf diese Verspiegelung wird nun eine elektrisch isolierende Schicht flächig aufgebracht, z. B. eine der nachfolgend

beschriebenen Schichten. Auf diese Schicht wird nun wieder eine metallische Schicht aus einem der oben genannten Metalle oder deren Kombinationen aufgebracht, die letztlich die Flächensegmente und ihre Zuleitungen darstellt. Die Herstellung der Flächensegmente und ihrer Zuleitungen erfolgt wie im folgenden beschrieben. Schließlich werden die Zuleitungen mit einer elektrisch isolierenden Schicht überzogen, wie im folgenden beschrieben ist.

Die Verspiegelungsmaterialien können auch auf die nicht leitfähig beschichtete Seite einer der oben beschriebenen transparenten und transparent leitfähig beschichteten Platten oder Folien aufgebracht sein. In diesem Fall dient die Metallschicht nicht als Leiter, sondern nur als Reflektor. Auch so erhält man eine reflektierende elektrochrome Vorrichtung.

Die Materialien können aber auch gemischt eingesetzt werden, z.B. ein Gitter aus einem metallischen Leiter, das mit beispielsweise einer ITO-Schicht überzogen ist.

Eine bevorzugte Ausführungsform der erfindungsgemäßen elektrochromen Anzeigevorrichtung ist eine solche, bei der die Flächensegmente und die elektrischen Zuleitungen aus dem gleichen elektrisch leitfähigen Material bestehen.

Solche Materialien können beispielsweise alle oben aufgeführten transparenten und nicht transparenten leitfähigen Materialien sein, z.B. ITO oder Gold, Chrom oder gemischte Materialien wie die Kombination eines metallischen Gitters mit beispielsweise ITO.

Eine ebenfalls bevorzugte Ausführungsform der erfindungsgemäßen elektrochromen Anzeigevorrichtung ist eine solche, bei der die Flächensegmente und die elektrischen Zuleitungen aus verschiedenem elektrisch leitfähigem Material bestehen.

In diesem Fall bestehen beispielsweise die Flächensegmente aus einem der oben aufgeführten transparenten Materialien, z.B. ITO, und die Zuleitungen aus einem Material besonders guter Leitfähigkeit. Dabei kann es sich um metallische Zuleitungen, z.B. Gold, Palladium oder um kombinierte Zuleitungen aus einem Material wie z.B. ITO und einem metallischen Leiter, z.B. Gold, in Form von Drähten oder Gittern handeln.

Die Zuleitungen werden vorteilhaft so gestaltet, daß ihr elektrischer Widerstand möglichst gering ist. Dadurch wird die Einfärbung verschiedener Flächensegmente gleich intensiv, unabhängig davon wie lange ihre jeweilige Zuleitung ist. Geeignete Zuleitungen sind also solche, die beispielsweise aus einem metallischen Leiter bestehen oder einen solchen in Kombination mit einem anderen leitfähigen Material enthalten. Geeignete Zuleitungen, die keine metallischen Leiter enthalten, z.B. solche aus ITO, sind solche, die im Rahmen des Designs der erfindungsgemäßen elektrochromen Anzeigevorrichtung möglichst breit ausgeführt sind.

Die Flächensegmente und ihre Zuleitungen werden zuerst aus einer flächigen leitfähigen Beschichtung auf Glas- oder Kunstoffplatten oder Folien herausgearbeitet oder auf die Glas- oder Kunststoffplatten oder Folien aufgebracht. Anschließend wird die elektrisch isolierende Schicht auf die Zuleitungen aufgebracht.

Die Herausarbeitung der Flächensegmente und Zuleitungen kann durch mechanisches Entfernen der leitfähigen Schicht beispielsweise durch Ritzen, Kratzen, Schaben oder Fräsen oder auf chemischem Wege beispielsweise durch Ätzen mittels beispielsweise einer salzsauren Lösung von $FeCl_2$ und $SnCl_2$ oder anderen Agenzien wie $HNO_3$ erfolgen. Diese Entfernung der leitfähigen Schicht kann über Masken, z.B. solchen aus Photolack, örtlich gesteuert werden. Es können aber auch die elektrisch getrennten Flächensegmente und Zuleitungen durch gezieltes, z. B. mittels Masken, Aufbringen, z. B. Sputtern oder Drucken, der leitfähigen Schicht hergestellt werden. Alle diese eben beschriebenen Techniken sind im allgemeinen aus der Herstellung von Flüssigkristalldisplays (LCD) bekannt.

Ein anderes Verfahren zur Herstellung der Flächensegmente und ihrer Zuleitungen sowie zur Gestaltung der Flächensegmente selbst besteht darin, die elektrisch leitfähige Schicht in geeigneter Weise durch eine erfindungsgemäße elektrisch isolierende Schicht abzudecken. Enthält die Anzeigevorrichtung beispielsweise nur ein einziges Flächensegment und seine Zuleitung, dann geht man von einer flächig leitfähig beschichteten Platte oder Folie aus. Auf diese leitfähige Beschichtung wird, wie weiter unten näher erläutert wird, die elektrisch isolierende Schicht so aufgebracht, daß sie nur das darzustellende Flächensegment nicht abdeckt. Soll das Flächensegment beispielsweise ein Symbol darstellen, dann erfolgt die Abdeckung so, daß nur das Symbol nicht abgedeckt ist. Der Vorteil dieser Verfahrensweise liegt in einer einfachen Herstellung, die eine Strukturierung der leitfähigen Schicht vermeidet. Ein weiterer Vorteil liegt darin, daß die Stromzufuhr zum Flächensegment wegen der flächigen, nicht strukturierten leitfähigen Schicht niederohmig ist und somit das Symbol gleichmäßig eingefärbt wird. Besteht das Symbol aus mehreren Teilen, z. B. Buchstaben, dann erlaubt diese Vorgehensweise die Darstellung des Symbols, z. B. über Masken, direkt ausgehend von einer Vorlage des gewünschten Symbols. Aufwendige Designänderungen, wie sie bei einer Strukturierung der leitfähigen Schicht in Form des Symbols notwendig wären, beispielsweise die Verbindung der Buchstaben über leitfähige Stege, die dann auch noch einzeln isolierend abgedeckt werden müssen, usw., entfallen. Auch bei sehr komplexen, feinstrukturierten Symbolen ist so eine schnelle und gleichmäßige Einfärbung des Symbols gewährleistet, was bei einer Strukturierung der leitfähigen Schicht selbst mit hohem Designaufwand nicht immer sichergestellt werden kann. Enthält die Anzeigevorrichtung mehrere getrennt zu schaltende Flächensegmente, dann teilt man vorteilhaft die leitfähige Beschichtung der Platte oder Folie in möglichst große Teile auf, indem möglichst schmale Streifen zwischen den Teilen z. B. weggeätzt werden. Jedes Teil ist so groß, daß es ein Flächensegment und seine Zuleitung aufnehmen kann. Diese einzelnen Teile werden nun zusammen in einem Arbeitsgang so mit einer isolierenden Schicht überzogen, daß in jedem Teil nur das

darzustellende Flächensegment nicht abgedeckt ist (s. Fig. 5). Die hier geschilderte Vorgehensweise ist auch ein Gegenstand der Erfindung.

Besonders bei Anzeigevorrichtungen mit vielen Flächensegmenten ist es schwierig, für jedes Flächensegment eine möglichst niederohmige Zuleitung zu einer Kante der Platte oder Folie zu legen. In einem solchen Fall können vorteilhaft einzelne Flächensegmente durch die Platte oder Folie hindurch kontaktiert werden. Hierzu enthält die Platte oder Folie im Bereich des Flächensegments oder eines der oben beschriebenen Teile der leitfähigen Bechichtung ein Loch, durch das eine elektrische Kontaktierung an die leitfähige Schicht herangeführt wird. Der Durchmesser der Löcher soll klein sein, beispielsweise 0,2 bis 1 mm. Die Löcher können je nach Durchmesser und Material der Platten oder Folien gebohrt, gestanzt oder geätzt werden.

Durch dieses Loch kann nun ein elektrischer Leiter geführt werden, der mit dem Flächensegment leitfähig verbunden ist. So können die Flächensegmente beliebig dicht beieinander liegen, ohne daß dazwischen Platz für Leiterbahnen freigehalten werden muß. Die Verdrahtung der durch das Loch geführten elektrischen Leiter erfolgt auf der Rückseite der Platte oder Folie auf konventionelle Weise entweder durch einzelne Drähte oder Kabel oder beispielsweise über gedruckte Schaltungen. Spannungsabfälle in den Zuleitungen kann so durch ausreichend dicken Querschnitt dieser externen Stromleiter begegnet werden, ohne daß das Design der Anzeigevorrichtung davon berührt wird.

Die Verbindung zwischen dem leitfähigen Flächensegment und dem durch das Loch geführten elektrischen Leiter kann vielfältig vorgenommen werden, z.B. durch Leitlack. Besonders vorteilhaft ist auch das Innere des Lochs leitfähig beschichtet und elektrisch mit dem dazugehörenden Flächensegment verbunden. Dann kann die elektrische Verbindung im Inneren des Lochs erfolgen. Zur mechanischen Stabilisierung einer solchen leitfähigen Verbindung im Loch kann zusätzlich von der Platten-oder Folienrückseite her der Draht mit dem Leitlack und der Umgebung des Loches mit einem Klebstoff verklebt werden (s. Fig. 7).

Als erfindungsgemäße elektrisch isolierende Schicht wird eine organische, makro-molekulare Verbindung oder, wenn die Zuleitungen aus Metall bestehen, das Oxid des Metalls verwendet. Bevorzugte organische Verbindungen sind Klebstoffe und Lacke.

In den aus dem Stand der Technik bekannten elektrochromen Medien sind solche Paare von Redoxsubstanzen enthalten, die nach Reduktion bzw. Oxidation farbige Radikale, Kationradikale oder Anionradikale bilden, die chemisch reaktiv sind. Wie beispielsweise aus Topics in Current Chemistry, Vol. 92, S. 1-44 (1980) bekannt ist, können solche Radikal(ionen) empfindlich gegenüber Elektrophilen oder Nukleophilen oder auch Radikalen sein. Es muß deshalb zum Erreichen einer hohen Stabilität einer elektrochromen Vorrichtung, die ein solches elektrochromes Medium enthält, das mehrere tausend Schaltcyclen überstehen soll, dafür gesorgt werden, daß das elektrochrome Medium absolut frei von Elektrophilen, z.B. Protonen, Nukleophilen und Sauerstoff ist. Weiterhin muß dafür gesorgt werden, daß sich solche reaktiven Spezies nicht durch elektrochemische Prozesse an den Elektroden während des Betriebs der elektrochromen Vorrichtung bilden.

Aber auch die elektrisch isolierende Schicht auf den Zuleitungen der elektrochromen Zelle muß so beschaffen sein, daß sie keine reaktiven Bestandteile enthält, abspaltet oder in Kontakt mit dem elektrochromen System bildet, die mit den elektrochromen Substanzen oder den aus ihnen elektrochemisch gebildeten Spezies wie den eben genannten radikalischen oder radikalionischen Spezies oder den elektrochemisch gebildeten oder im Gleichgewicht immer vorhandenen doppelt reduzierten oder doppelt oxidierten Spezies reagieren.

Geeignete Klebstoffe und Lacke sind Epoxi- und Acrylat-Systeme.

Epoxikleber sind beispielsweise aus J. W. Muskopf, S. B. McCollister in Ullmann's Encyclopedia of Organic Chemistry, VCH Verlagsgesellschaft mbH, 5th edition, Vol. A 9, S. 547 ff, 1987 bekannt. Die Aushärtung kann nach einem anionischen oder kationischen Mechanismus erfolgen.

Acrylat-Kleber sind beispielsweise aus W. Dierichs et al. in Ullmann's Encyklopädie der technischen Chemie, VCH Verlagsgesellschaft mbH, 4. Auflage, Band 14, S. 233 ff, 1977 bekannt. Die Aushärtung erfolgt nach einem radikalischen Mechanismus, der durch Ultraviolett-Strahlung mit Hilfe von zugesetzten Photoinitiatoren gestartet werden kann.

Der erfindungsgemäße Epoxi-Kleber zur elektrischen Isolierung der Zuleitungen ist ein Zweikomponenten- oder Einkomponentenkleber. Bevorzugt handelt es sich um einen Zweikomponenten-Epoxi-Kleber, bei dem beispielsweise die eine Komponente eine epoxidische Verbindung enthält und die andere Komponente eine aminische, anhydridische oder Lewis-Säure- oder Lewis-Base-Verbindung enthält oder um einen Einkomponenten-Epoxi-Kleber, der beispielsweise eine epoxidische Verbindung und eine verkappte Lewis- oder Brønsted-Säure- oder Lewis- oder Bronsted-Base-Verbindung enthält, die unter Wärme- oder Lichteinwirkung eine Lewis- oder Bronsted-Säure- oder Lewis- oder Brønsted-Base-Verbindung freisetzt.

Besonders bevorzugt handelt es sich bei der epoxidischen Komponente um ein Epoxid der Formel

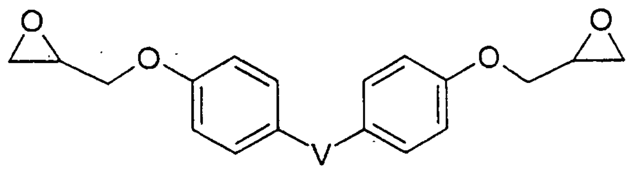

(CC),

worin

V für eine Brücke steht, die ebenfalls Epoxi-Gruppen tragen kann, und die aminische Komponente ein primäres oder sekundäres aliphatisches, cyclo-aliphatisches, aromatisches, araliphatisches oder heterocyclisches, mindestens bifunktionelles Amin ist
und die Lewis-Säure-Verbindung, die in verkappter Form vorliegt, ein Nicht-metallhalogenid ist und die Bronsted-Säure-Verbindung, die in verkappter Form vorliegt, eine starke Protonensäure ist, die sich von Nichtmetall-halogeniden ableitet.

Solche Nichtmetallhalogenide sind beispielsweise Bortrifluorid, Bortrichlorid, Phosphorpentafluorid, Arsenpentafluorid, Arsenpentachlorid, Antimonpentafluorid oder Antimonpentachlorid. Die davon abgeleiteten Protonensäuren sind dann beispielsweise $HBF_4$, $HBCl_4$, $HPF_6$, $HAsF_6$, $HAsCl_6$, $HSbF_6$, $HSbCl_6$. Verkappte Nichtmetallhalogenide sind beispielsweise Addukte von Aminen an diese Nichetallhalogenide, beispielsweise $BF_3.NH(C_2H_5)_2$, $BF_3.NH(CH_3)C_2H_5$ usw. Solche Verbindungen spalten thermisch die Nichtmetallhalogenide ab. Auch Tetrafluorborate von aromatischen oder heterocyclischen Diazoniumsalzen sind verkappte Nichtmetallhalogenide. Sie spalten photochemisch $BF_3$ ab. Diaryliodonium oder Triarylsulfoniumsalze mit Anionen der oben genannten Protonensäuren, z. B. $(C_6H_5)_2I^+PF_6^-$, spalten photochemisch in die entsprechenden Protonensäuren, z. B. $HPF_6$, auf. Solche verkappten Produkte sind beispielsweise aus R. S. Bauer in R. W. Tess, G. W. Poehlein (eds.) Applied Polymer Science, 2nd ed., ACS Symposium Series 285, ACS Washington, 1985, S. 931-961 bekannt.
Diese Kleber können zusätzlich auch noch andere Komponenten enthalten wie beispielsweise Glycidylester oder Glycidylether, Phenole oder Alkohole sowie im Falle der photochemisch härtbaren auch Peroxide oder Ferrocen. Beispiele sind Glycidyl-neodecanoat, Hexandiol-glycidylether, Phenol, Benzylalkohol, Cumolhydroperoxid.
Erfindungsgemäße Acrylat-Kleber für die elektrische Isolierung der Zuleitungen bestehen bevorzugt aus einer Bis- und einer Tris-Acrylatkomponente, denen ein Photoinitiator zugemischt ist, der unter Lichteinwirkung im UV- oder daran benachbarten blauen Spektralbereich Radikale freisetzt.
Besonders bevorzugt handelt es sich bei der epoxidischen Komponente um ein Epoxid der Formel

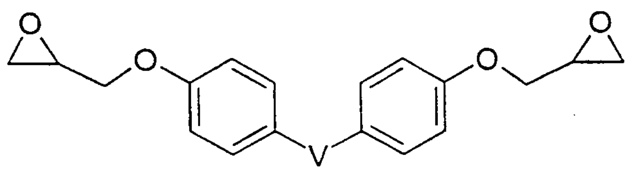

(CC),

worin

V für eine Brücke steht, die ebenfalls Epoxi-Gruppen tragen kann,

und bei der Lewis-Säure-Verbindung, die in verkappter Form vorliegt, um ein Nichtmetallhalogenid und bei der Bronsted-Säure-Verbindung, die in verkappter Form vorliegt, um eine starke Protonensäure, die sich von Nichtmetallhalogeniden ableitet.
Lewis- und Bronsted-Säuren und ihre verkappten Formen sind oben näher beschrieben.
Ebenfalls besonders bevorzugt handelt es sich bei der Acrylatmischung um Verbindungen der Formeln

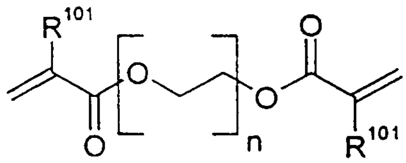

(CCI)

worin

n für eine ganze Zahl von 0 bis 20, vorzugsweise 0 bis 10 steht und

$R^{101}$ für Wasserstoff oder Methyl steht und

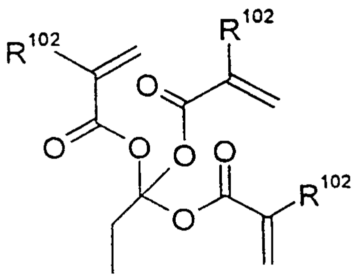

(CCII)

worin

$R^{102}$ für Wasserstoff oder Methyl steht.

Die Zusammensetzung der Acrylatmischung aus (CCI) und (CCII) liegt besonders bevorzugt im Bereich (Teile an CCI)/(Teile an CCII) = 1 bis 5.

Bei den Photoinitiatoren handelt es sich besonders bevorzugt um Verbindungen auf der Basis von Benzophenon-Derivaten oder Thioxanthonen, die bei der Photolyse Radikale liefern. Besonders bevorzugt werden hierbei Photoinitiatoren für die UV-Härtung verwendet, so z. B. Irgacure® 651 (Ciba-Geigy), Darocur® 1116, Darocur® 1173, Darocur® 1664, Darocur® 2273, Darocur® 4043 (alle von E. Merck, Darmstadt). Der besonders bevorzugte Konzentrationsbereich dieser Photoinitiatoren liegt im Bereich 0,01 bis 5 Gew.-%.

Ganz besonders bevorzugt handelt es sich bei der epoxidischen Komponente des erfindungsgemäßen Epoxi-Kleber um ein Epoxid der Formel

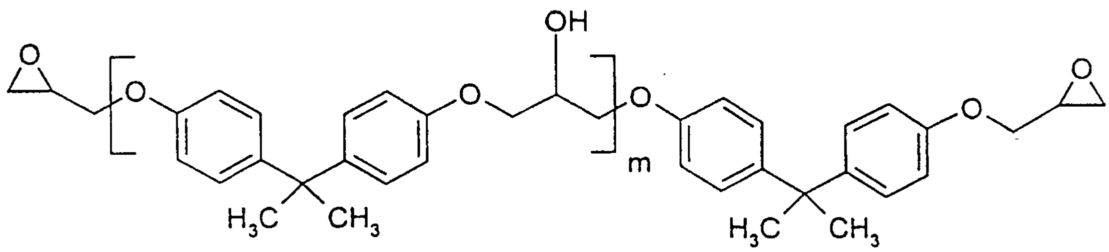

(CCIII) oder

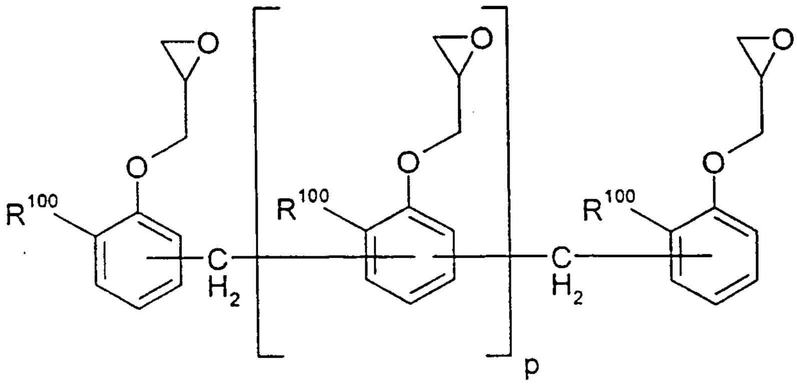

(CCIV) ,

worin

m und p unabhängig voneinander für eine ganze Zahl von 0 bis 20, vorzugsweise 0 bis 5 stehen und

$R^{100}$ für Wasserstoff oder Methyl steht

und bei der aminischen Komponente um ein aliphatisches Polyamin der Formel

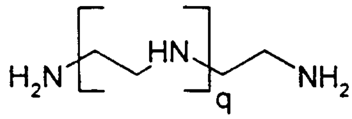

(CCV) ,

worin

q für eine ganze Zahl von 2 bis 10, vorzugsweise 2 bis 4 steht, oder

um ein araliphatisches Amin wie $\alpha,\alpha'$-Diamino-m- oder p-xylol oder
um Polyaminoimidazolin oder
um ein aromatisches Amin wie Bis-(4-aminophenyl)methan- oder Bis-(4-aminophenyl)sulfon
und bei der verkappten Lewis-Säure-Verbindung um ein Addukt von Bortrifluorid an sekundäre Amine wie $BF_3$ -$NH(CH_3)$ $C_2H_5$ oder um ein Diazoniumsalz wie $Ar\text{-}N_2^+BF_4^-$ oder bei der verkappten Bronsted-Säure-Verbindung um ein Iodoniumsalz wie $(Ar)_2I^+BF_4^-$ oder $(Ar)_2I^+PF_6^-$ oder um ein Sulfoniumsalz wie $(Ar)_3S^+BF_4^-$ oder $(Ar)_3S^+PF_6^-$,
worin

Ar für einen aromatischen Rest, vorzugsweise Phenyl, steht.

Ebenfalls ganz besonders bevorzugt handelt es sich bei den Acrylaten um eine Mischung aus Verbindungen der Formeln

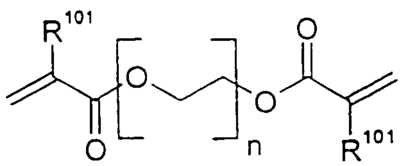

(CCI)

worin

n für eine ganze Zahl von 0 bis 20, vorzugsweise 5 bis 15 steht und

$R^{101}$ für Wasserstoff oder Methyl steht und

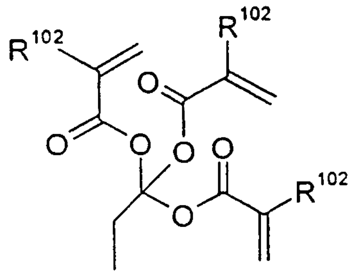

(CCII)

worin

$R^{102}$ für Wasserstoff oder Methyl steht.

Die Zusammensetzung der Acrylatmischung aus (CCI) und (CCII) liegt ganz besonders bevorzugt im Bereich (Teile an CCI)/(Teile an CCII) = 1 bis 2.

Bei den Photoinitiatoren handelt es sich ganz besonders bevorzugt um Verbindungen auf der Basis von Benzophenon-Derivaten oder Thioxanthonen, die bei der Photolyse Radikale liefern. Ganz besonders bevorzugt werden hierbei Photoinitiatoren für die UV-Härtung verwendet, so z. B. ganz besonders Darocur® 1173 (E. Merck, Darmstadt) und Irgacure® 651 (Ciba-Geigy). Der ganz besonders bevorzugte Konzentrationsbereich dieser Photoinitiatoren liegt im Bereich 0,1 bis 3 Gew.-%.

Insbesondere bevorzugte thermisch härtende Epoxikleber enthalten Epoxide der Formel (CCIII), worin

m für 2 bis 5 steht,

und Amine der Formel (CCV), worin

q für 2 bis 4 steht,

sowie $\alpha,\alpha'$-Diamino-m-xylol oder Mischungen davon sowie gegebenenfalls weitere epoxidische Verbindungen wie Glycidylester, beispielsweise Glycidyl-neodecanoat und/oder Glycidylether, beispielsweise Hexandiolglycidylether.

Insbesondere bevorzugte photochemisch oder photochemisch initiiert härtende Epoxikleber enthalten Epoxide der Formel (CCIII), worin

m für 2 bis 5 steht,

und als verkappte Lewis-Säure-Verbindung ein Diazoniumsalz wie $Ar\text{-}N_2^+BF_4^-$ oder als verkappte Brønsted-Säure-Verbindung ein Iodoniumsalz wie $(Ar)_2I^+BF_4^-$ oder $(Ar)_2I^+PF_6^-$ oder um ein Sulfoniumsalz wie $(Ar)_3S^+BF_4^-$ oder $(Ar)_3S^+PF_6^-$, worin

Ar für einen aromatischen Rest, vorzugsweise Phenyl, steht.

Insbesondere bevorzugte photochemisch härtende Acrylat-Kleber enthalten Acrylate der Formeln (CCI) worin

n für 5 bis 10 steht und

$R^{101}$ für Wasserstoff steht und

und (CCII)
worin

$R^{102}$ für Wasserstoff steht.

Die insbesonders bevorzugte Zusammensetzung der Acrylatmischung aus (CCI) und (CCII) liegt bei (Teile an CCI)/(Teile an CCII) = 5/3.

Der insbesonders bevorzugte Photoinitiator Darocur® 1173 (E. Merck, Darmstadt) wird dabei in einer Konzentration von 0,5 Gew.-% eingesetzt.

Die Aushärtung der Klebstoffe hängt von ihrer chemischen Zusammensetzung ab.

Thermisch härtbare Epoxikleber auf Basis von Epoxiden der Formel (CCIII),
worin

m für 2 bis 5 steht,

und Aminen der Formel (CCV),
worin

q für 2 bis 4 steht,

sowie α,α'-Diamino-m-xylol oder Mischungen davon sowie gegebenenfalls weiterer epoxidischer Verbindungen wie Glycidylester, beispielsweise Glycidyl-neodecanoat werden beispielsweise ausgehärtet bei Temperaturen von 90 bis 170°C, vorzugsweise 110 bis 150°C über einen Zeitraum von beispielsweise 5 bis 60 min, vorzugsweise 10 bis 30 min.

Photochemisch oder photochemisch initiiert härtende Epoxikleber auf Basis von Epoxiden der Formel (CCIII),
worin

m für 2 bis 5 steht,

und einer verkappten Lewis-Säure, beispielsweise $NO_2$-$C_6H_4$-$N_2^+BF_4^-$, oder einer verkappten Brønsted-Säure-Verbindung, beispielsweise $(C_6H_5)_2I^+BF_4^-$ oder $(C_6H_5)_2I^+PF_6^-$ oder $(C_6H_5)_3S^+BF_4^-$ oder $(C_6H_5)_3S^+PF_6^-$, werden durch sichtbares oder UV-Licht entweder komplett ausgehärtet oder vorteilhafter durch sichtbares oder UV-Licht nur initiiert, wobei der Kleber nicht aushärtet, und dann bei Raumtemperatur oder höherer Temperatur, beispielsweise bei 30 bis 150°C, vorzugsweise bei 70 bis 130°C ausgehärtet. Die Aushärtezeit hängt von der Temperatur ab. So kann sie bei Raumtemperatur beispielsweise 10 bis 24 h betragen, bei 110°C aber nur 10 bis 30 min. Für die Belichtung kann eine UV-Lampe, eine Blitzlampe oder eventuell auch Tageslicht oder das Licht von Tageslichtlampen verwendet werden.

In so ausgehärteten Klebern sind die Kleberbestandteile, insbesondere die epoxidischen und aminischen Bestandteile so fest und vollständig in das makromolekulare Gefüge eingebaut, daß sie nicht mehr mit dem erfindungsgemäßen elektrochromen Medium oder den durch Reduktion oder Oxidation gebildeten Spezies reagieren können. Die Verklebungen sind auch so fest, daß sie thermische Belastungen beispielsweise zwischen -40 und +105°C problemlos überstehen und auch in diesem Temperaturbereich nicht von der erfindungsgemäßen elektrochromen Flüssigkeit angelöst, aufgequollen oder unterwandert werden.

Photochemisch härtbare Acrylat-Kleber auf Basis von Acrylaten der Formeln (CCI)
worin

n für 5 bis 15 steht und

$R^{101}$ für Wasserstoff steht und

und (CCII)
worin

$R^{102}$ für Wasserstoff steht

mit einer Zusammensetzung der Acrylatmischung (Teile an CCI)/(Teile an CCII) = 5/3 und einer Photoinitiatorkonzentration an Darocur® 1173 von 0,5 Gew.-% werden durch UV-Licht einer geeigneten Lampe bei Raumtemperatur vollständig ausgehärtet.

So ausgehärtete Klebungen überstehen thermische Belastungen beispielsweise zwischen -40 und +105°C problemlos und werden auch nicht in diesem Temperaturbereich von der erfindungsgemäßen elektrochromen Flüssigkeit angelöst, aufgequollen oder unterwandert.

Die oben beschriebenen Klebstoffe werden auf die Zuleitungen aufgetragen, beispielsweise aufgerakelt oder aufgedruckt, und dann wie oben beschrieben ausgehärtet. Dabei können aber auch die nicht leitfähig beschichteten Bereiche der Platten oder Folien teilweise oder vollständig ebenfalls mit diesem Klebstoff bedeckt sein.

Bei den fotohärtbaren Klebstoffen kann auch anders vorgegangen werden: Sie werden flächig auf die leitfähig beschichtete und in Flächensegmente und Zuleitungen aufgeteilte Seiten der Platten oder Folien aufgetragen. Anschließend werden durch eine Maske die Zuleitungen belichtet. Dabei härtet der Klebstoff an diesen Stellen aus. Anschließend wird der nicht ausgehärtete Klebstoff von den unbelichteten Stellen entfernt, z.B. durch ein geeignetes Lösungsmittel. Auch bei dieser Vorgehensweise können die nicht leitfähig beschichteten Bereiche der Platten oder Folien teilweise oder vollständig belichtet und somit mit ausgehärtetem Klebstoff abgedeckt werden.

Als elektrisch isolierende Schicht kann allgemeinerweise eine anorganische Verbindung eingesetzt werden. Solche anorganischen Schichten werden auf die Zuleitungen aufgebracht, beispielsweise durch Bedrucken, Sputtern oder ähnliche Techniken. Sie können auch aus Vorprodukten, die auf die Zuleitungen aufgebracht wurden, erzeugt werden, beispielsweise durch Thermolyse oder Oxidation.

Geeignete anorganische isolierende Verbindungen sind Oxide, beispielsweise Siliciumoxid. Solche Oxide werden beispielsweise aufgebracht durch Sputtern. Typische Schichtdicken für solche Oxide sind beispielsweise 10 bis 5000 nm, vorzugsweise 20 bis 1000 nm.

Wenn die Zuleitungen aus Metall bestehen, ist erfindungsgemäß die isolierende Schicht das Oxid des Metalls. Vorteilhaft wird es durch oberflächliche Oxidation der metallischen Zuleitung erzeugt. Die Segmente, insbesondere wenn sie ebenfalls aus Metall bestehen, werden während dieses Oxidationsprozesses abgedeckt, beispielsweise durch eine Klebefolie, einen Photolack oder eine andere dicht abschließende Maske. Die Oxidschicht muß jedoch so dick sein, daß sie eine ausreichende elektrische Isolierung bewirkt. Sie muß auch dicht sein und beispielsweise keine Pinholes enthalten. Ein Beispiel ist eine leitfähige Schicht aus Aluminium und eine isolierende Schicht aus Aluminiumoxid.

Die erfindungsgemäße elektrochrome Vorrichtung enthält im elektrochromen Medium mindestens ein Paar von Redoxsubstanzen $OX_2$ und $RED_1$, von denen eine reduzierbar und die andere oxidierbar ist, wobei beide farblos oder nur schwach gefärbt sind und nach Anlegen einer Spannung an die elektrochrome Vorrichtung die eine Substanz reduziert und die andere oxidiert wird, wobei wenigstens eine farbig wird und nach Abschalten der Spannung sich die beiden ursprünglichen Redoxsubstanzen wieder zurückbilden und die elektrochrome Vorrichtung sich entfärbt.

Es ist jedoch auch der umgekehrte Fall gemeint, nämlich daß wenigstens eine der beiden elektrochromen Substanzen gefärbt ist und durch Reduktion oder Oxidation an der Kathode bzw. Anode farblos oder andersfarbig wird.

Geeignete elektrochrome Substanzen sind bekannt, z.B. aus D.Theis in Ullmann's Encyclopedia of Industrial Chemistry, Vol. A8, S. 622, Verlag Chemie 1987, US-A 4 902 108, WO 97/30 134 und 97/30 135.

Bevorzugt sind solche elektrochrome Medien, die die elektrochromen Substanzen in Lösung, in Gelen oder in festen Schichten enthalten, besonders bevorzugt sind Lösungen und Gele.

Bevorzugt sind solche erfindungsgemäßen elektrochromen Vorrichtungen, in denen

a) die reduzierbare Substanz mindestens eine, vorzugsweise wenigstens zwei chemisch reversible Reduktionswellen im cyclischen Voltammogramm und die oxidierbare Substanz entsprechend mindestens eine, vorzugsweise wenigstens zwei chemisch reversible Oxidationswellen besitzen, oder

b) die reduzierbare Substanz und die oxidierbare Substanz über eine Brücke B kovalent aneinander gebunden sind, oder

c) als reduzierbare und/oder oxidierbare Substanz solche ausgewählt sind, bei denen der reversible Übergang zwischen der oxidierbaren Form und der reduzierbaren Form oder umgekehrt mit dem Bruch bzw. dem Aufbau einer σ-Bindung verbunden ist, oder

d) die reduzierbare Substanz und/oder die oxidierbare Substanz Metallsalze oder Metallkomplexe sind von solchen Metallen, die in mindestens zwei Oxidationsstufen existieren, oder

e) die reduzierbare und/oder oxidierbare Substanz Oligo- und Polymere sind, die mindestens eines der genannten Redoxsysteme, aber auch Paare solcher Redoxsysteme, wie sie unter a) bis d) definiert sind, enthalten, oder

f) als reduzierbare und/oder oxidierbare Substanz Mischungen der in a) bis e) beschriebenen Substanzen eingesetzt werden, vorausgesetzt diese Mischungen enthalten mindestens ein reduzierbares und mindestens ein oxidierbares Redoxsystem.

Durch Auswahl der elektrochromen Verbindungen $RED_1$ und $OX_2$ und/oder Mischungen davon lassen sich beliebige monochrome Farbtöne einstellen. Für eine polychrome Farbdarstellung können zwei oder mehrere solcher elektrochromer Vorrichtungen flächig aufeinander gelegt werden, wobei jede dieser Vorrichtungen einen anderen Farbton erzeugen kann. Vorzugsweise wird ein solcher Stapel so aufgebaut, daß die sich berührenden Vorrichtungen eine lichtdurchlässige Platte gemeinsam haben, die dann auch auf beiden Seiten leitfähig beschichtet ist und je nach Ausführung in Segmente unterteilt ist. Beispielsweise besteht dann ein Stapel aus drei elektrochromen Vorrichtungen aus mindestens vier Platten. Durch Einschalten von Segmenten in verschiedenen dieser gestapelten Vorrichtungen lassen sich mehrfarbige Anzeigen realisieren. Werden hintereinander liegende Segmente verschiedener solcher Vorrichtungen eingeschaltet, erhält man Mischfarben. So lassen sich im Rahmen einer Trichromie beliebige Farben darstellen, also beispielsweise bunte Bilder.

Im Sinne der Erfindung geeignete $OX_2$ und $RED_1$ sind solche Substanzen, die bei ihrer Reduktion bzw. Oxidation an der Kathode bzw. Anode in dem genannten Lösungsmittel Produkte $RED_2$ und $OX_1$ liefern, die keine chemische Folgereaktion eingehen, sondern komplett wieder zu $OX_2$ und $RED_1$ oxidiert bzw. reduziert werden können.

Geeignete reduzierbare Substanzen $OX_2$ sind beispielsweise

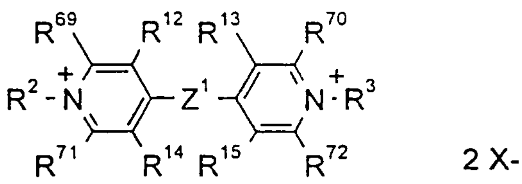

(II),

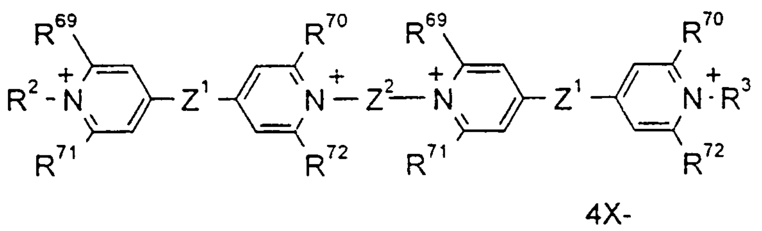

(III),

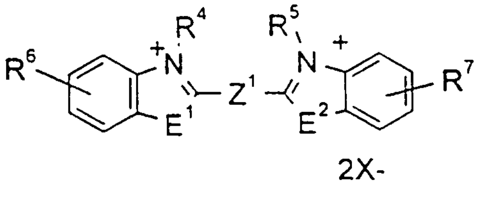

(IV),

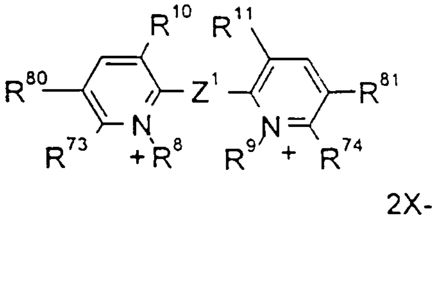

(V),

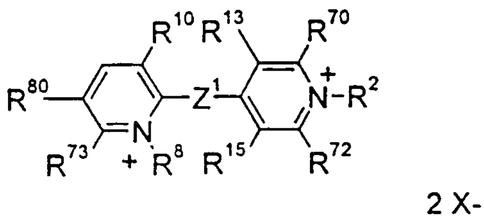

(IIa),

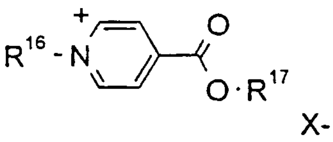

(VI),

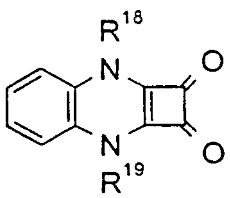

(VII),

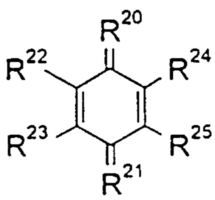

(VIII),

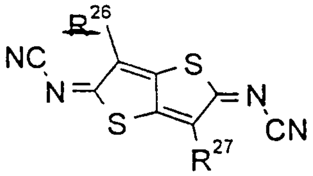

(IX),

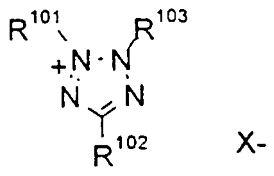

(CI),

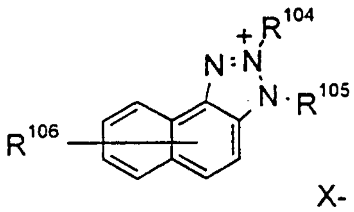

(CII),

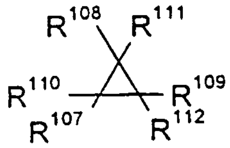

(CIII),

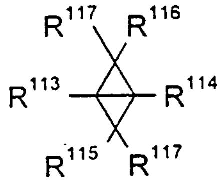

(CIV),

worin

| | |
|---|---|
| $R^2$ bis $R^5$, $R^8$, $R^9$, $R^{16}$ bis $R^{19}$ | unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten oder |
| $R^4$; $R^5$ bzw. $R^8$; $R^9$ | gemeinsam eine $-(CH_2)_2$- oder $-(CH_2)_3$-Brücke bilden können, |
| $R^6$, $R^7$ und $R^{22}$ bis $R^{25}$ | unabhängig voneinander Wasserstoff, $C_1$- bis $C_4$-Alkyl, $C_1$- bis $C_4$-Alkoxy, Halogen, Cyan, Nitro oder $C_1$- bis $C_4$-Alkoxycarbonyl bedeuten oder |
| $R^{22}$; $R^{23}$ und/oder $R^{24}$; $R^{25}$ | eine -CH=CH-CH=CH-Brücke bilden können, |
| $R^{10}$; $R^{11}$; $R^{10}$; $R^{13}$, $R^{12}$; $R^{13}$ und $R^{14}$; $R^{15}$ | unabhängig voneinander Wasserstoff oder paarweise eine $-(CH_2)_2$-, |

$-(CH_2)_3-$ oder -CH=CH-Brücke bedeuten,

$R^{20}$ und $R^{21}$ unabhängig voneinander O, N-CN, $C(CN)_2$ oder N-$C_6$-bis $C_{10}$-Aryl bedeuten,

R26 und $R^{27}$ Wasserstoff, $C_1$- bis $C_4$-Alkyl, $C_1$- bis $C_4$-Alkoxy, Halogen, Cyan, Nitro, $C_1$- bis $C_4$-Alkoxycarbonyl oder $C_6$- bis $C_{10}$-Aryl bedeuten,

$R^{69}$ bis $R^{74}$, $R^{80}$ und $R^{81}$ unabhängig voneinander Wasserstoff oder $C_1$- bis $C_6$-Alkyl bedeuten oder

$R^{69}$; $R^{12}$, $R^{70}$; $R^{13}$, $R^{73}$; $R^{80}$ und/oder $R^{74}$; $R^{81}$ gemeinsam eine -CH=CH-CH=CH-Brücke bilden,

$E^1$ und $E^2$ unabhängig voneinander O, S, $NR^1$ oder $C(CH_3)_2$ bedeuten oder

$E^1$ und $E^2$ gemeinsam eine $-N-(CH_2)_2-N-$Brücke bilden,

$R^1$ $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl, $C_6$- bis $C_{10}$-Aryl bedeutet,

$Z^1$ eine direkte Bindung, -CH=CH-, $-C(CH_3)=CH-$, -C(CN)=CH-, -CCl=CCl-, -C(OH)=CH-, -CCl=CH-, -C C-, -CH=N-N=CH-, $-C(CH_3)=N-N=C(CH_3)-$oder -CCl=N-N=CCl- bedeutet,

$Z^2$ $-(CH_2)_r-$ oder $-CH_2-C_6H_4-CH_2-$ bedeutet,

r eine ganze Zahl von 1 bis 10 bedeutet,

$R^{101}$ bis $R^{105}$ unabhängig voneinander $C_6$- bis $C_{10}$-Aryl oder einen ggf. benzanellierten aromatischen oder quasiaromatischen fünf- oder sechsgliedrigen heterocyclischen Ring bedeuten,

$R^{107}$, $R^{109}$, $R^{113}$ und $R^{114}$ unabhängig voneinander einen Rest der Formeln (CV) bis (CVII)

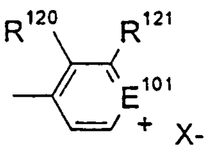

(CV),

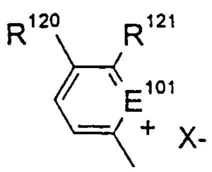

(CVI),

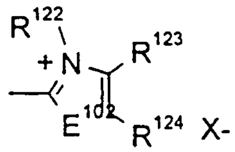

(CVII)

bedeuten,

| | |
|---|---|
| $R^{108}$, $R^{115}$ und $R^{116}$ | unabhängig voneinander $C_6$- bis $C_{10}$-Aryl oder einen Rest der Formel (CV) bedeuten, |
| $R^{110}$ bis $R^{112}$, $R^{117}$ und $R^{118}$ | unabhängig voneinander Wasserstoff, $C_1$-bis $C_4$-Alkyl, Halogen oder Cyano bedeuten, |
| $E^{101}$ und $E^{102}$ | unabhängig voneinander O, S oder N-$R^{119}$ bedeuten, |
| $R^{119}$ und $R^{122}$ | unabhängig voneinander $C_1$- bis $C_{18}$-Alkyl, $C_2$- bis $C_8$-Alkenyl, $C_4$- bis $C_7$-Cycloalkyl, $C_7$- bis $C_{15}$-Aralkyl oder $C_6$- bis $C_{10}$-Aryl bedeuten, |
| $R^{106}$, $R^{120}$, $R^{121}$, $R^{123}$ und $R^{124}$ | unabhängig voneinander Wasserstoff, $C_1$- bis $C_4$-Alkyl, $C_1$- bis $C_4$-Alkoxy, Halogen, Cyano, Nitro oder $C_1$- bis $C_4$-Alkoxycarbonyl bedeuten oder |
| $R^{120}$, $R^{121}$ bzw. $R^{123}$, $R^{124}$ | gemeinsam eine -CH=CH-CH=CH-Brücke bilden und |
| $X^-$ | ein unter den Bedingungen redox-inertes Anion bedeutet. |

Geeignete oxidierbare Substanzen $RED_1$ sind beispielsweise

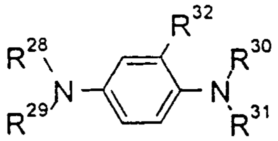

(X),

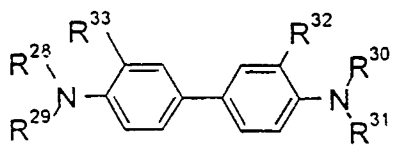

(XI),

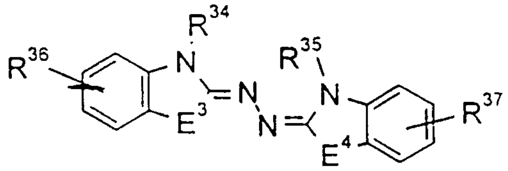

(XII),

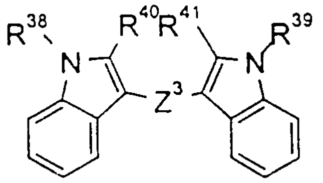

(XIII),

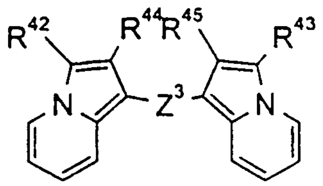

(XIV),

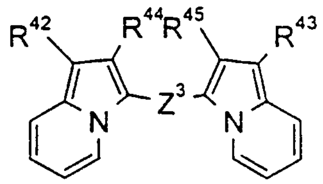

(XV),

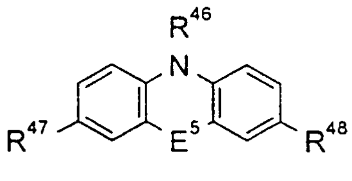

(XVI),

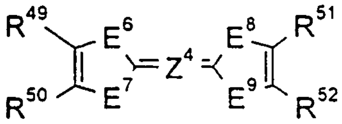

(XVII),

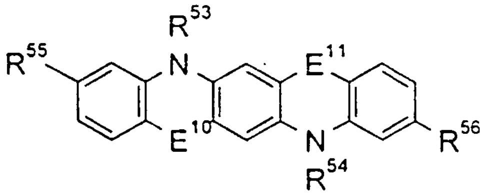

(XVIII),

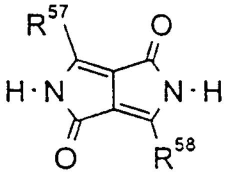

(XIX),

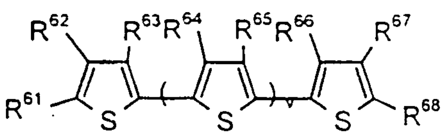

(XX),

worin

$R^{28}$ bis $R^{31}$, $R^{34}$, $R^{35}$, $R^{38}$, $R^{39}$, $R^{46}$, $R^{53}$ und $R^{54}$ unabhängig voneinander $C_1$-bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten,

$R^{32}$, $R^{33}$, $R^{36}$, $R^{37}$, $R^{40}$, $R^{41}$, $R^{42}$ bis $R^{45}$, $R^{47}$, $R^{48}$, $R^{49}$ bis $R^{52}$ und $R^{55}$ bis $R^{58}$ unabhängig voneinander Wasserstoff, -$C_1$- bis $C_4$-Alkyl, $C_1$- bis $C_4$-Alkoxy, Halogen, Cyan, Nitro, $C_1$- bis $C_4$-Alkoxycarbonyl, $C_6$- bis $C_{10}$-Aryl bedeuten und

$R^{57}$ und $R^{58}$ zusätzlich einen aromatischen oder quasiaromatischen fünf- oder sechsgliedrigen heterocyclischen Ring, der gegebenenfalls benzanneliert ist, bedeuten und $R^{48}$ zusätzlich $NR^{75}R^{76}$ bedeutet oder

$R^{49}$; $R^{50}$ und/oder $R^{51}$; $R^{52}$ eine -$(CH_2)_3$-, -$(CH_2)_4$-, -$(CH_2)_5$- oder -CH=CH-CH=CH-Brücke bil-

den,

| | |
|---|---|
| $Z^3$ | eine direkte Bindung, eine -CH=CH- oder -N=N-Brücke bedeutet, |
| $=Z^4=$ | eine direkte Doppelbindung, eine =CH-CH= oder =N-N=-Brücke bedeutet, |
| $E^3$ bis $E^5$, $E^{10}$ und $E^{11}$ | unabhängig voneinander O, S, $NR^{59}$ oder $C(CH_3)_2$ bedeuten und |
| $E^5$ | zusätzlich C=O oder $SO_2$ bedeutet, |
| $E^3$ und $E^4$ | unabhängig voneinander zusätzlich -CH=CH- bedeuten können, |
| $E^6$ bis $E^9$ | unabhängig voneinander S, Se oder $NR^{59}$ bedeuten, |
| $R^{59}$; $R^{75}$ und $R^{76}$ | unabhängig voneinander $C_1$- bis $C_{12}$-Alkyl, $C_2$- bis $C_8$-Alkenyl, $C_4$- bis $C_7$-Cycloalkyl, $C_7$- bis $C_{15}$-Aralkyl, $C_6$- bis $C_{10}$-Aryl bedeuten, und |
| $R^{75}$ | zusätzlich Wasserstoff bedeutet oder $R^{75}$ und $R^{76}$ in der Bedeutung von $NR^{75}R^{76}$ gemeinsam mit dem N-Atom, an das sie gebunden sind, einen fünf-oder sechsgliedrigen Ring bedeuten, der gegebenenfalls weitere Heteroatome enthält, |
| $R^{61}$ bis $R^{68}$ | unabhängig voneinander Wasserstoff, $C_1$- bis $C_6$-Alkyl, $C_1$- bis $C_4$-Alkoxy, Cyan, $C_1$- bis $C_4$-Alkoxycarbonyl oder $C_6$- bis $C_{10}$-Aryl bedeuten und |
| $R^{61}$; $R^{62}$ und $R^{67}$ ; $R^{68}$ | unabhängig voneinander zusätzlich eine $-(CH_2)_3-$, $-(CH_2)_4-$ oder -CH=CH-CH=CH-Brücke bilden oder |
| $R^{62}$ ; $R^{63}$, $R^{6}1$ ; $R^{65}$ und $R^{66}$; $R^{67}$ | eine $-O-CH_2CH_2-O-$ oder $-O-CH_2CH_2CH_2-O-$Brücke bilden, |
| v | eine ganze Zahl zwischen 0 und 10.000 bedeutet. |

Ebenfalls geeignet als $RED_1$ sind Anionen wie z.B. $I^-$, $I_3^-$, $Br^-$, $SCN^-$.

Über eine Brücke B verknüpfte, gegebenenfalls oligo- oder polymere Redoxsysteme sind beispielsweise solche der Formel

$$Y-[-(-B-Z-)_a-(-B-Y-)_b-]_c-B-Z \qquad (I),$$

worin

| | |
|---|---|
| Y und Z | unabhängig voneinander für einen Rest $OX_2$ oder $RED_1$ stehen, wobei aber mindestens ein Y für $OX_2$ und mindestens ein Z für $RED_1$ steht,<br>wobei<br>$OX_2$ für den Rest eines reversibel elektrochemisch reduzierbaren Redox-systems steht, und<br>$RED_1$ für den Rest eines reversibel elektrochemisch oxidierbaren Redox-systems steht, |
| B | für ein Brückenglied steht, |
| c | für eine ganze Zahl von 0 bis 1000 steht, und |
| a und b | unabhängig voneinander für eine ganze Zahl von 0 bis 100 stehen. |

Vorzugsweise ist $(a+b)*c \leq 10.000$.

Hierbei ist unter reversibel elektrochemisch reduzierbar oder oxidierbar gemeint, daß die Elektronenübertragung ohne oder auch mit Änderung des σ-Gerüsts erfolgen kann ganz im Sinne der oben genannten Definition der erfindungsgemäßen $OX_2$ und $RED_1$.

Insbesondere sind mit den elektrochromen Verbindungen der Formel (I) solche der Formeln

$OX_2$-B-$RED_1$ (Ia),

$OX_2$-B-$RED_1$-B-$OX_2$ (Ib),

$RED_1$-B-$OX_2$-B-$RED_1$ (Ic),

oder

$OX_2$-(B-$RED_1$-B-$OX_2$)$_d$-B-$RED_1$ (Id)

gemeint,
worin

| | |
|---|---|
| $OX_2$, $RED_1$ und B | die oben angegebene Bedeutung haben und |
| d | für eine ganze Zahl von 1 bis 5 steht. |

Mit $OX_2$ und $RED_1$ in den Formeln (I) und (Ia) bis (Id) sind insbesondere Reste der oben beschriebenen Redoxsysteme der Formeln (II), (IIa) bis (IX), (CI) bis CIV) und (X) bis (XX) gemeint, wobei die Bindung zum Brückenglied B über einen der Reste $R^2$ bis $R^{19}$, $R^{22}$ bis $R^{27}$, $R^{28}$ bis $R^{58}$, $R^{61}$, $R^{62}$, $R^{67}$, $R^{68}$, $R^{122}$ oder im Falle, daß einer der Reste $E^1$ oder $E^2$ für $NR^1$ oder einer der Reste $E^3$ bis $E^{11}$ für $NR^{59}$ oder einer der Reste $E^{101}$ bis $E^{102}$ für $NR^{119}$ steht, über $R^1$, $R^{59}$ bzw. $R^{119}$ erfolgt und die genannten Reste dann für eine direkte Bindung stehen, und

| | |
|---|---|
| B | für eine Brücke der Formeln $-(CH_2)_n-$ oder $-[Y^1_s(CH_2)_m-Y^2]_o-(CH_2)_p-Y^3_q-$ steht, die durch $C_1$- bis $C_4$-Alkyl, $C_1$- bis $C_4$-Alkoxy, Halogen oder Phenyl substituiert sein kann, |
| $Y^1$ bis $Y^3$ | unabhängig voneinander für O, S, $NR^{60}$, COO, CONH, NHCONH, Cyclopentandiyl, Cyclohexandiyl, Phenylen oder Naphthylen stehen, |
| $R^{60}$ | $C_1$- bis $C_6$-Alkyl, $C_2$- bis $C_6$-Alkenyl, $C_4$- bis $C_7$-Cycloalkyl, $C_7$- bis $C_{15}$-Aralkyl oder $C_6$- bis $C_{10}$-Aryl bedeutet, |
| n | eine ganze Zahl von 1 bis 12 bedeutet, |
| m und p | unabhängig voneinander eine ganze Zahl von 0 bis 8 bedeuten, |
| o | eine ganze Zahl von 0 bis 6 bedeutet und |
| q und s | unabhängig voneinander 0 oder 1 bedeuten. |

In einem anderen Typ oligo- oder polymerer Systeme können die Gruppierungen $OX_2$ und/oder $RED_1$ auch beispielsweise als Seitenketten an einer Hauptgruppe, beispielsweise einem Poly(meth)acrylat, Silikon, Polycarbonat, Polyurethan, Polyharnstoff, Polyester, Polyamid, Cellulose oder anderen oligo- oder polymeren Systemen angebunden sein.

Beispiele für Metallsalze oder Metallkomplexe, die als $OX_2$ oder $RED_1$ eingesetzt werden können, sind $Fe^{3+/2+}$, $Ni^{3+/2+}$, $Co^{3+/2+}$, $Cu^{2+/+}$, $[Fe(CN)_6]^{3-/4-}$, $Fe_4[Fe(CN)_6]_3^{0/4-}$, $(Co(CN)_6]^{3-/4-}$, $[Fe(Cyclopentadienyl)_2]^{0/+}$, $Lu(Pc)^{2+}$ bis 2-(Pc = Phthalocyanin), $Fe[Fe(CN)_6]^{0/1-}$.

Als Gegenionen für Metallionen und kationische Komplexe kommen alle redox-inerten Anionen $X^-$, wie sie später noch genauer beschrieben werden, in Frage, als Gegenionen der anionischen Komplexe alle redox-inerten Kationen $M'^+$ in Frage, beispielsweise Alkalimetalle oder quaternierte Ammoniumsalze wie $Na^+$, $K^+$, $N(CH_3)_4^+$, $N(C_4H_9)_4^+$, $C_6H_5CH_2N(CH_3)_3^+$ und andere.

Ebenfalls bevorzugt ist eine elektrochrome Vorrichtung, die Mischungen der oben allgemein und bevorzugt genannten elektrochromen Substanzen enthält. Beispiele für solche Mischungen sind (II) + (CI) + (XVI), (II) + (IV) + (XII), (Ia) + (II)+ (XVI), (Ia) + (CI), ohne daß dadurch irgendeine Einschränkung ausgedrückt werden soll.

Die Mischungsverhältnisse sind in weiten Grenzen variabel. Sie erlauben die Optimierung eines gewünschten Farbtons oder Schwärzegrades und/oder die Optimierung der gewünschten Dynamik der Vorrichtung.

In den oben genannten Substituentenbedeutungen sind Alkylreste, auch abgewandelte, wie z. B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie $C_1$- bis $C_4$-Alkoxy, Fluor, Chlor, Hydroxy, Cyano, $C_1$- bis $C_4$-Alkoxycarbonyl oder COOH.

Unter Cycloalkylresten werden vorzugsweise solche mit 3 bis 7 C-Atomen, insbesondere mit 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkylresten, sind Phenyl oder Naphthylreste, insbesondere Phenylreste. Sie können durch 1 bis 3 der folgenden Reste substituiert sein: $C_1$- bis $C_6$-Alkyl, $C_1$- bis $C_6$-Alkoxy, Fluor, Chlor, Brom, Cyano, Hydroxy, $C_1$- bis $C_6$-Alkoxycarbonyl oder Nitro. Zwei benachbarte Reste können auch einen Ring bilden.

Unter gegebenenfalls benzanellierten aromatischen oder quasiaromatischen fünf oder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: $C_1$- bis $C_6$-Alkyl, $C_1$- bis $C_6$-Alkoxy, Fluor, Chlor, Brom, Cyano, Nitro, Hydroxy, Mono- oder Di-$C_1$- bis $C_6$-alkylamino, $C_1$- bis $C_6$-Alkoxycarbonyl, $C_1$- bis $C_6$-Alkylsulfonyl, $C_1$- bis $C_6$- Alkanoylamino, Phenyl oder Naphthyl. Zwei benachbarte Reste können auch einen Ring bilden.

Die elektrochromen Substanzen sind entweder bekannt (Topics in Current Chemistry, Vol. 92, S. 1-44, (1980), Angew. Chem. 90, 927 (1978), Adv. Mater. 3, 225, (1991), DE-OS 3.917.323, J. Am. Chem. Soc. 117, 8528 (1995), J. C. S. Perkin II 1990, 1777, DE-OS 4.435.211, EP-A 476.456, EP-A 476.457, DE-OS 4.007.058, J. Org. Chem. 57, 1849 (1992) und J. Am. Chem. Soc. 99, 6120, 6122 (1977) oder lassen sich analog herstellen. Die Verbindungen der Formel (I) sind ebenfalls bekannt (WO 97/30134) oder lassen sich aus an sich bekannten Bausteinen beispielsweise nach folgendem Schema synthetisieren:

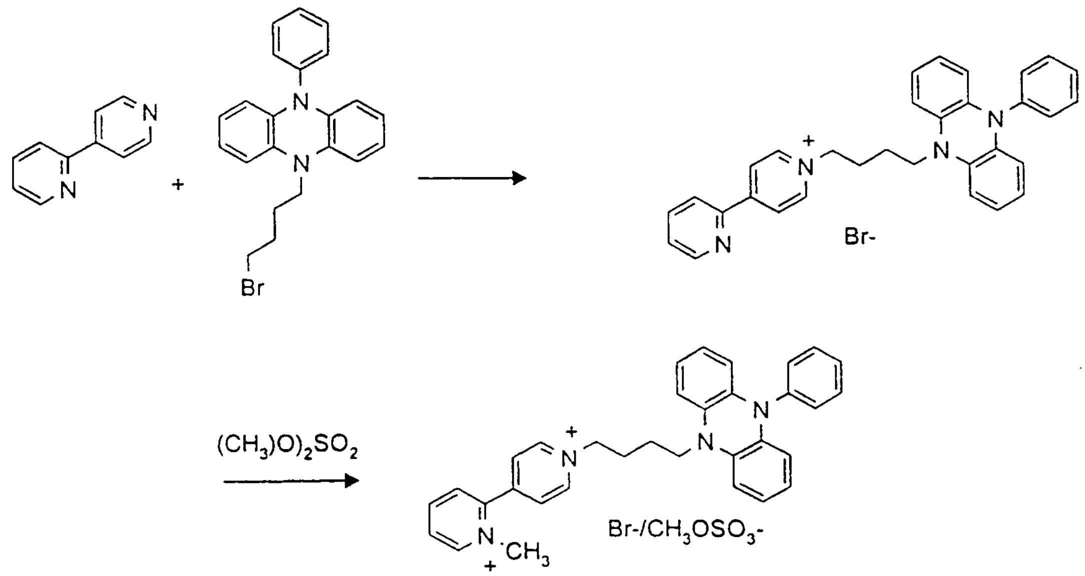


Synthetisch bedingte Ionen wie Bromid werden im Anschluß gegen redox-inerte Ionen ausgetauscht.

Die erfindungsgemäße elektrochrome Anzeigevorrichtung enthält mindestens ein Lösungsmittel, in dem die elektrochromen Substanzen, gegebenenfalls ein Leitsalz und gegebenenfalls weitere Zusätze gelöst sind. Das Lösungsmittel kann auch gelförmig verdickt sein, beispielsweise durch Polyelektrolyte, poröse Feststoffe oder Nanopartikel mit großer aktiver Oberfläche.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Die erfindungsgemäße elektrochrome Lösung kann mindestens ein inertes Leitsalz enthalten. Insbesondere wenn wenigstens eine der Substanzen des Redoxpaares $RED_1/OX_2$ ionischer Natur ist, kann auf den Zusatz eines Leitsalzes verzichtet werden.

Als inertes Leitsalz sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen $X^-$ in den Formeln (II) bis (VI), (CI), (CII) und (CV) bis (CVII) in in den Metallsalzen kommen alle redox-inerten, farblosen Anionen in Frage.

Beispiele sind Tetrafluoroborat, Tetraphenylborat, Cyano-triphenylborat, Tetramethoxyborat, Tetrapropoxyborat, Tetraphenoxyborat, Perchlorat, Chlorid, Nitrat, Sulfat, Phosphat, Methansulfonat, Ethansuifonat, Tetradecansulfonat, Pentadecansulfonat, Trifluormethansulfonat, Perfluorbutansulfonat, Perfluoroctansulfonat, Benzolsulfonat, Chlorbenzolsulfonat, Toluolsulfonat, Butylbenzolsulfonat, tert. Butylbenzolsulfonat, Dodecylbenzolsulfonat. Trifluormethylbenzolsulfonat, Hexafluorophosphat, Hexafluoroarsenat, Hexafluorosilicat, 7,8- oder 7,9-Dicarbanido-undecaborat(-1) oder (-2), die gegebenenfalls an den B- und/oder C-Atomen durch eine oder zwei Methyl-, Ethyl-, Butyl- oder Phenyl-Gruppen substituiert sind, Dodecahydro-dicarbadodecaborat(-2) oder B-Methyl-C-phenyl-dodecahydro-dicarbadodecaborat(-1).

Die Leitsalze werden vorzugsweise im Bereich 0 bis 1 mol/l eingesetzt.

Als weitere Zusätze können Verdicker eingesetzt werden, um die Viskosität der elektroaktiven Lösung zu steuern. Das kann Bedeutung haben zur Vermeidung von Segretation, d.h. der Bildung von streifiger oder fleckiger Farbbildung bei längerem Betrieb der elektrochromen Vorrichtung im eingeschalteten Zustand, und zur Steuerung der Ausbleichgeschwindigkeit nach Abschalten des Stroms.

Als Verdicker eignen sich alle für diesen Zweck üblichen Verbindungen wie z. B. Polyacrylat, Polymethacrylat (Lucite L ®), Polycarbonat oder Polyurethan.

Als weitere Zusätze für die elektrochrome Flüssigkeit kommen UV-Absorber in Erage. Beispiele sind UVINUL® 3000 (2,4-Dihydroxybenzophenon, BASF), SANDUVOR® 3035 (2-Hydroxy-4-n-octyloxybenzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethylhexyl-2-cyano-3,3-diphenylacrylat, BASF), UVINUL® 3088 (2-Ethylhexyl-p-methoxycinnamat, BASF), CHIMASSORB® 90 (2-Hydroxy-4-methoxy-benzophenon, Ciba).

Bevorzugt sind die vier Letztgenannten. Ebenfalls bevorzugt sind Mischungen von UV-Absorbern, beispielsweise der vier Letztgenannten. Bevorzugt ist die Mischung aus UVINUL® 3039 (BASF) und CHIMASSORB® 90.

Die UV-Absorber werden im Bereich 0.01 bis 2 mol/l, vorzugsweise 0.04 bis 1 mol/l eingesetzt.

Die elektrochrome Lösung enthält die elektrochromen Substanzen $OX_2$ und $RED_1$, insbesondere die der Formeln (I) bis (XX) und (CI) bis (CIV) jeweils in einer Konzentration von mindestens $10^{-4}$ mol/l, vorzugsweise 0.001 bis 0.5 mol/l. Die Gesamtkonzentration aller enthaltenen elektrochromen Substanzen liegt vorzugsweise unter 1 mol/l.

Zum Betrieb der erfindungsgemäßen elektrochromen Anzeigevorrichtung wird eine konstante, gepulste oder in ihrer Amplitude veränderliche, beispielsweise sinusrechteck- oder dreieckförmige veränderliche, Gleichspannung benutzt.

Es kann jedoch auch Wechselspannung verwendet werden, also eine Spannung, deren Polarität sich mit einer bestimmten Frequenz verändert. Diese Spannungsänderung kann in Rechteckform, Dreieckform, Sinusform oder in beliebig anderer Form erfolgen. Insbesondere können die Phasen entgegengesetzter Polarität unterschiedlich lang sein.

Die Frequenz der Wechselspannung bzw. der gepulsten bzw. der amplitudenveränderlichen Gleichspannung kann im Bereich von $10^{-2}$ bis $10^4$ Hz, vorzugsweise $10^{-1}$ bis $10^3$ Hz, besonders bevorzugt 10 bis $5x10^2$ Hz liegen. Die Frequenz kann auch während des Betriebs veränderlich sein. Eine besonders bevorzugte Form der frequenzveränderlichen Wechselspannung sind die in Fig. 1 gezeigte rechteckförmige Wechselspannung, sowie Abwandlungen davon mit derselben Frequenzfolge, aber mit dreieck- oder sinusförmigem Verlauf.

Die Amplitude der angelegten Spannung hängt von der gewünschten Farbtiefe und von den Reduktions- bzw. Oxidationspotentialen der verwendeten $OX_2$ und $RED_1$ ab. Solche Potentiale können aus Topics in Current Chemistry, Volume 92, S. 1-44, (1980) oder Angew. Chem. 90, 927 (1978) oder der dort zitierten Literatur entnommen werden. Die Differenz der Reduktions- und Oxidationspotentiale ist ein Richtwert für die erforderliche Spannung, jedoch kann die elektrochrome Anzeigevorrichtung bereits bei niedrigerer oder auch mit höherer Spannung betrieben werden. In vielen Fällen, z. B. bei Verwendung von $OX_2$ = Formel (II) oder (IV) und $RED_1$ = Formel (X), (XII), (XVI) oder (XVII) oder deren Verknüpfung über eine Brücke gemäß Formel (I), insbesondere Formel (Ia) bis (Id), liegt die zum Betrieb nötige Spannung $\leq$ 1 V. Solche elektrochromen Anzeigevorrichtungen können in einfacher Weise mit dem Strom aus photovoltaischen Siliciumzellen versorgt werden.

Wird die Spannung abgeschaltet, so entfärbt sich die erfindungsgemäße elektrochrome Anzeigevorrichtung wieder. Diese Löschung kann dadurch beschleunigt werden, daß die kontaktierten Segmente bzw. Platten kurzgeschlossen werden. Auch durch mehrmaliges Umpolen der Spannung, gegebenenfalls bei gleichzeitiger Verringerung der Spannung, kann die Anzeige sehr rasch gelöscht werden.

Durch Variation der Schichtdicke der elektrochromen Anzeigevorrichtung, der Viskosität der elektrochromen

Lösung und/oder durch die Auswahl von elektrochromen Substanzen im Hinblick auf ihre Diffusions- oder Driftfähigkeit lassen sich die Einschalt- und Ausschaltzeiten der Anzeigevorrichtung in weiten Grenzen beeinflussen. So zeigen beispielsweise dünne Schichten kürzere Schaltzeiten als dicke. Die Größe der Moleküle des elektrochromen Mediums, insbesondere bei den über B verbrückten oder den oligo- oder polymeren Systemen beeinflußt die Diffusions- oder Driftfähigkeit. Je größer die Moleküle sind, desto geringer ist ihre Diffusions- und Driftfähigkeit. Auch der Ladungszustand der Moleküle beeinflußt die Driftfähigkeit. Je höher die Ladung bei gleicher Molekülgröße ist, desto größer ist die Driftgeschwindigkeit. Es lassen sich also schnell und langsam schaltbare Anzeigevorrichtungen bauen, die den jeweiligen Einsatzzwecken optimal angepaßt sind.

Die Anzeigevorrichtung kann in einem Stromspar- oder Refresh-Modus betrieben werden. Im Stromspar- oder Refresh-Modus wird die an der Anzeigevorrichtung anliegende Gleichspannung oder Wechselspannung immer wieder unterbrochen. In den spannungsfreien Phasen sind die Kontakte der Anzeigevorrichtung nicht leitfähig miteinander verbunden. Die Phasen mit Spannung und die spannungsfreien Phasen wechseln sich ab und können von gleicher oder unterschiedlicher Dauer sein. In einer bevorzugten Betriebsform sind die Phasen, in denen Spannung anliegt, kürzer als die Phasen ohne Spannung. Das Verhältnis kann zwischen 1:1,5 bis 1:30, vorzugsweise zwischen 1:2 und 1:10 liegen. Die absolute Dauer der Phasen kann sehr unterschiedlich sein und hängt im wesentlichen von der Bauform der Anzeigevorrichtung ab. Mit zunehmender Viskosität des elektrochromen Mediums und/oder Schichtdicken der Anzeigevorrichtung kann die absolute Dauer der Phasen zunehmen. Bei Schichtdicken von 100 bis 400 $\mu$m kann die Phasendauer im Bereich von 0,5 bis 20 Sekunden liegen. Bei niedrig viskosem elektrochromem Medium und/oder bei geringen Schichtdicken der Anzeigevorrichtung, z.B. 5 bis 50 $\mu$m, kann die absolute Dauer unter einer Sekunde liegen, beispielsweise 0,001 bis 0,5 Sekunden, vorzugsweise 0,01 bis 0,1 Sekunden. Durch die spannungfreien und damit stromlosen Phasen werden je nach Verhältnis der Phasenlängen erhebliche Mengen an elektrischem Strom eingespart. Bei einem Verhältnis von 1:9 werden z.B. 90 % des Stroms im Vergleich zum Dauerbetrieb gespart. Durch die Bauart der Anzeigevorrichtung und die daran angepaßte absolute Phasenlänge wird ein Schwanken oder Flackern der Intensität der eingeschalteten elektrochromen Anzeigevorrichtung oder ihrer Segmente oder Pixel sowie eine Unschärfe der Segmente oder Pixel durch Diffusion während der spannungslosen Phasen vermieden.

Die erfindungsgemäßen Anzeigevorrichtungen können als Segment- oder Matrixanzeigen in Uhren, Computern, Elektrogeräten, Elektronikgeräten wie Radios, Verstärker, Fernseher, CD-Player, in Zielanzeigen in Bussen und Zügen, in Abfahrts-oder Abfluganzeigen in Bahnhöfen und Flughäfen, in Flachbildschirme, in Zustandsanzeigen, wie Anzeigen des Ladezustands von Stromquellen, Anzeigen des Füllstands oder der Geschwindigkeit eingesetzt werden.

Weitere Anwendungen sind Scheiben wie Fensterscheiben, Trennscheiben oder Sichtschutzscheiben in Büros, Straßenfahrzeugen, Flugzeugen, Eisenbahnen, Bankschaltern, Türverglasungen, Motorrad- oder Pilotenhelmen, Verglasung von Haushaltsgeräten, Spiegel jeglicher Art wie plane, sphärische oder asphärische oder Kombinationen daraus für Straßenfahrzeuge und Eisenbahnen, sofern diese mindestens eine schaltbare, statische oder variable Anzeigevorrichtung enthalten. Mögliche Anzeigen in Trennscheiben können "Bitte nicht stören" oder "Schalter nicht besetzt" sein. In Auto-Spiegeln können z.B. die Außentemperatur, die Zeit, die Himmelsrichtung oder Störungen im Fahrzeug, wie Angaben über die Öltemperatur oder offene Türen, angezeigt werden.

## Figuren und Beispiele

Es zeigen

- Fig. 1 Zeitlicher Verlauf einer an die elektrochrome Anzeigevorrichtung angelegten frequenzveränderlichen Wechselspannung.
- Fig. 2 Mit Anzeigesegmenten, Zuleitungen und Kontakten bedruckte Belichtungsmaske zur Herstellung der leitfähigen Segmente auf den Platten der Anzeigevorrichtung mittels UV-Belichtung von Photolack und anschließendem Ätzen.
- Fig. 3 Elektrochrome Anzeigevorrichtung mit isolierten elektrischen Leitungen in Aufsicht (a) und in Seitenansicht (b).
- Fig.4 Anordnung von Anzeigesegmenten, Zuleitungen und Kontakten auf den beiden Platten einer elektrochromen Anzeigevorrichtung.
- Fig. 5 a.Glasplatte für elektrochrome Anzeigevorrichtung mit zwei Löchern zur Kontaktierung;
  b. Belichtungsmaske mit schwarzen Quadraten.
- Fig. 6 a. Belichtungsmaske mit schwarzen Flächensegmenten und Anschlüssen;
  b. Glasplatte mit leitenden Flächensegmenten und Anschlüssen und zwei Löchern.
- Fig. 7 Seitenansicht einer Kontaktierung mit einem Draht durch ein Loch in der Glasplatte

## Beispiel 1

Eine mit ITO beschichtete Glasplatte wurde mit einem handelsüblichen Photolack, Positiv 20 der Firma Kontakt

Chemie, Iffezheim, auf der beschichteten Seite besprüht und im Dunkeln bei 50 bis 70°C 1 h lang getrocknet. Dann wurde die Lackschicht mit einer Belichtungsmaske 1 bedeckt, die gemäß Fig. 2 schwarze Bereiche in Form von Anzeigesegmenten 14", Zuleitungen 13" und Kontakten 12" 1 in einer transparenten Umgebung enthielt. Die Belichtungsmaske 1 wurde durch Bedrucken einer Folie nach einer im Computer erstellten Vorlage mit einem Laserdrucker hergestellt. Durch die Belichtungsmaske 1 wurde die Photolackschicht mit dem UV-Licht einer Quecksilber-Lampe (HBO 200W/2 der Firma Osram) 3 min belichtet. Die Folie wurde anschließend entfernt und die Lackschicht in einem Natronlaugebad (7 g Natriumhydroxid pro Liter Wasser) an den belichteten Stellen abgespült. Die so vorbereitete Glasplatte wurde in ein Bad aus 67 g $FeCl_2$ x 4 $H_2O$, 6 g SnCl, x 2 $H_2O$, 104 ml Wasser und 113 ml 37-gew.-proz. Salzsäure gelegt, wodurch die ITO-Schicht an den lackfreien, ehemals belichteten Stellen abgelöst wurde. Die verbliebene Lackschicht wurde mit Aceton entfernt. Die in Fig. 3(a) in Aufsicht und in Fig. 3(b) in Seitenansicht dargestellte Glasplatte 11 trug nach dieser Behandlung Flächensegmente 14, Leiterverbindungen 13 und Kontakte 12 aus ITO.

Auf der mit ITO leitfähig beschichteten und geätzten Seite der Platte 11 wurden die Zuleitungen 13 mit dem photohärtenden Epoxikleber DELO-Katiobond® 4594, DELO Industrieklebstoffe, Landsberg, mit einem Pinsel dünn bestrichen. In Fig. 3(a) ist diese Abdeckung der Zuleitungen 18 nur teilweise eingezeichnet. Beim Anstrich wurde die nähere Umgebung der Zuleitungen 13 ebenfalls mit dem Klebstoff abgedeckt, während die Flächensegmente 14 in ihrer ganzen Form frei von Klebstoff blieben. Die Aushärtung des Klebers erfolgte durch 10-minütiges Belichten mit Tageslicht in der Nähe eines Fensters und anschließend für 20 min bei 105°C ohne Belichtung.

Eine Mischung aus 97 % photohärtendem Epoxikleber DELO-Katiobond® 4594, DELO Industrieklebstoffe, Landsberg, und 3 % Glaskugeln mit 50 μm Durchmesser wurde ringförmig 15 auf die mit ITO-beschichtete Seite einer zweiten Glasplatte 17 aufgetragen, wobei eine Öffnung 16 ausgespart wurde. Nun wurde die erste auf den Zuleitungen mit Klebstoff 18 isolierte Glasplatte 11 so auf die Kleberaupe gelegt, daß die ITO-Schichten der beiden Platten 11 und 17 einander zugewandt waren und eine Geometrie entstand, wie in Fig. 3(a) in Aufsicht und in Fig. 3(b) in Seitenansicht gezeigt. Die Aushärtung des Klebers erfolgte durch 10-minütiges Belichten mit Tageslicht in der Nähe eines Fensters und anschließend für 20 min bei 105°C ohne Belichtung.

Dann wurde die Zelle unter Stickstoff atmosphäre mit der Öffnung 16 nach unten senkrecht in eine Schale gestellt, die eine Lösung enthielt, die 0,06 molar an der elektrochromen Verbindung der Formel

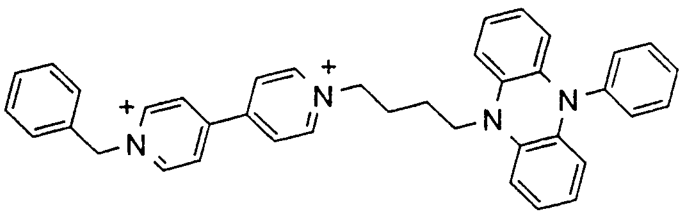

(CL)

$2\ BF_4^-$

und 0,4 molar an UV-Absorber der Formel

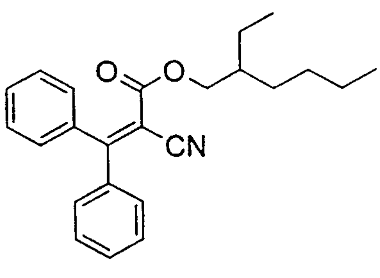

(CLI)

in wasserfreiem, sauerstofffreiem Propylencarbonat war. Dabei befand sich die Öffnung 16 der Zelle unterhalb des Flüssigkeitsspiegels in der Schale. Die Schale mit der Zelle wurde in einem Exsiccator gestellt. Dieser wurde auf 0.05 mbar evakuiert und anschließend vorsichtig mit Stickstoff belüftet. Während der Belüftung stieg die elektrochrome Lösung in die Zelle hinein und füllte bis auf eine kleine Blase das gesamte Volumen aus. Die Zelle wurde aus der Lösung entnommen, unter Stickstoff atmoshäre an der Öffnung 16 gereinigt, indem sie mit einem Papiertuch abgeputzt wurde, und anschließend mit dem photohärtenden Epoxikleber DELO-Katiobond® 4594, DELO Industrieklebstoffe, Landsberg,

verdickt mit 2 % Kieselgel-Aerosil, verschlossen. Zuletzt wurde 10 min mit Tageslicht in der Nähe eines Fensters belichtet und bei Raumtemperatur über Nacht ausgehärtet.

Bei einer ander Zelle wurde nach oben beschriebener Behandlung die Einfüllöffnung mit dem photochemisch härtbaren Acrylatkleber DELO-Photobond® 4497, DELO Industrieklebstoffe, Landsberg, verschlossen. Anschließend wurde 1 min unter einem Stickstoffstrom mit der Lampe DELOLUX® 03, DELO Industrieklebstoffe, Landsberg, die sich in einem Abstand von 8 cm zur verklebten Öffnung 16 befand, belichtet und bei Raumtemperatur über Nacht unter Stickstoffatmosphäre ausgehärtet.

Durch Anlegen einer Spannung von 0.9 V an die Kontakte 12 der Flächensegmente als Kathode und die nichtgeätzte zweite Platte 17 als Anode bildete sich rasch ein tief grünlich blaues Bild der kontaktierten Flächensegmente aus. Es konnten so alle mittels sieben Segmenten darstellbaren Buchstaben und Ziffern tief grünlich blau auf blaßgelbem Untergrund erzeugt werden. Die Zuleitungen 13 färbten sich nicht. Durch Abschalten der Spannung und Kurzschließen der Kontakte verschwand das Bild rasch wieder.

## Beispiel 1a

Alternativ konnte die Zelle auch mit Wechselspannung (sinusförmig) von 1.5 V und 200 Hz betrieben werden. Die kontaktierten Flächensegmente färbten sich grünlich blau auf blaß gelbem Untergrund. Die Zuleitungen 13 färbten sich nicht.

## Beispiel 1b

Alternativ konnte die Zelle auch mit einer Wechselspannung (Rechteck wechselnder Polarität von 1.5 V und 40 Hz) betrieben werden. Nach 1 s wurde 5 min lang die Spannung im Rhythmus 0.3 s/ 0.1 s aus- und eingeschaltet, wobei im ausgeschalteten Zustand die Kontakte offen waren. Die kontaktierten Flächensegmente färbten sich intensiv blaugrün auf blaß gelbem Untergrund und behielten Intensität und Randschärfe während der ganzen Versuchsdauer bei. Die Zuleitungen 13 färbten sich nicht.

## Beispiel 2

Es wurde eine Zelle gebaut wie in Beispiel 1 beschrieben. Zur Abdeckung der Zuleitungen 13 wurde jedoch ein anderer Klebstoff verwendet:

Zweikomponenten-Epoxi-Kleber, KÖRAPOX® 439 der Fa. Kömmerling, Pirmasenz (Komponente A: Epoxid der Formel (CCIII) mit m statistisch = 2, Glycidyl-neodecanoat; Komponente B: Polyaminoimidazolin, Tetraethylenpentamin, Triethylentetramin, Benzylalkohol, $\alpha,\alpha'$-Diamino-m-xylol, Phenol; A:B = 2:1 Gewichtsteile) wurde mit einem Pinsel dünn auf die Zuleitungen 13 aufgetragen. Dabei wurde die nähere Umgebung der Zuleitungen 13 ebenfalls mit dem Klebstoff abgedeckt, während die Flächensegmente 14 in ihrer ganzen Form frei von Klebstoff blieben. Nach 5 min Aushärtung bei Raumtemperatur wurde der Klebstoff für 20 min bei 150°C ausgehärtet.

Es war so eine Zelle (Fig. 3(a) und (b)) entstanden, bei der sich durch Anlegen einer Spannung von 0.9 V an die Kontakte 12 der Flächensegmente als Kathode und die nichtgeätzte zweite Platte 17 als Anode rasch ein tief grünlich blaues Bild der kontaktierten Flächensegmente ergab. Es konnten alle mittels sieben Segmenten darstellbaren Buchstaben und Ziffern tief grünlich blau auf blaßgelbem Untergrund erzeugt werden. Die Zuleitungen 13 färbten sich nicht. Durch Abschalten der Spannung und Kurzschließen der Kontakte verschwand das Bild rasch wieder.

## Beispiel 3

Es wurde eine Zelle gebaut wie in Beispiel 1 beschrieben. Zur Abdeckung der Zuleitungen 13 wurde jedoch ein anderer Klebstoff verwendet:

> Eine Mischung aus 3 Teilen Trimethylolpropan-triacrylat, 5 Teilen Polyethylenglycol-400-diacrylat und 0,5 Gewichtsprozent UV-Initiator Darocur® 1173, E.Merck, Darmstadt, wurde mit einem Pinsel dünn auf die Zuleitungen 13 aufgetragen. Dabei wurde die nähere Umgebung der Zuleitungen 13 ebenfalls mit dem Klebstoff abgedeckt, während die Flächensegmente 14 in ihrer ganzen Form frei von Klebstoff blieben. Durch 1-minütiges Belichten mit der Lampe DELOLUX® 03, DELO Industrieklebstoffe, Landsberg, die sich in einem Abstand von 30 cm von der Zelle befand wurde der Klebstoff unter Stickstoffatmosphäre ausgehärtet.

Gefüllt wurde die Zelle nach der in Beispiel 1 beschriebenen Methode mit einer Lösung, die 0,03 molar an der elektrochromen Verbindung der Formel

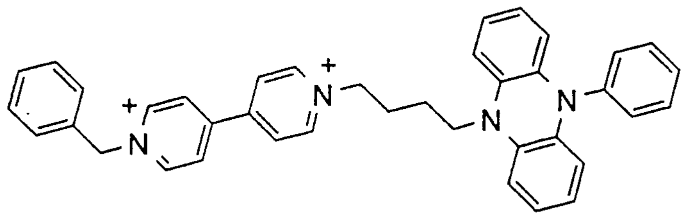

(CL),

2 BF4-

0,03 molar an der elektrochromen Verbindung der Formel

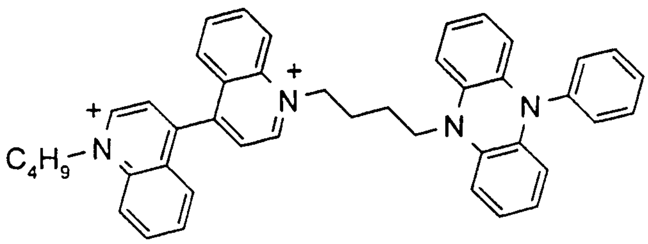

(CLII),

2 BF4-

0,1 molar an UV-Absorber der Formel

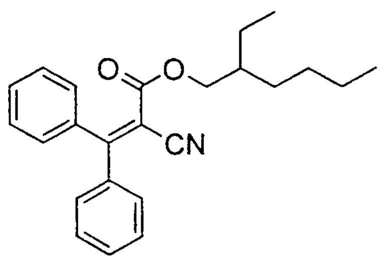

(CLI)

und 0,1 molar an UV-Absorber der Formel

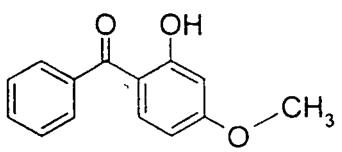

(CLIII)

in wasserfreiem, sauerstofffreiem Propylencarbonat war.

Es war so eine Zelle (Fig. 3(a) und (b)) entstanden, bei der sich durch Anlegen einer Spannung von 0.8 V an die Kontakte 12 der Flächensegmente als Kathode und die nichtgeätzte zweite Platte 17 als Anode rasch ein tief grünlich blaues Bild der kontaktierten Flächensegmente ergab. Es konnten alle mittels sieben Segmenten darstellbaren Buchstaben und Ziffern schwarz auf blaßgelbem Untergrund erzeugt werden. Die Zuleitungen 13 färbten sich nicht. Durch Abschalten der Spannung und Kurzschließen der Kontakte verschwand das Bild rasch wieder.

**Beispiel 4**

Es wurde eine Zelle gebaut wie in Beispiel 1 beschrieben. Zur Abdeckung der aus der ITO-Schicht geätzten Zuleitungen 13 wurde jedoch anders als in Beispiel 1 vorgegangen:

Die Platte 11 wurde auf der mit ITO leitfähig beschichteten und geätzten Seite flächig mit dem photochemisch härtbaren Acrylatkleber DELO-Photobond® 4468, DELO Industrieklebstoffe, Landsberg, bestrichen. Durch eine Maske, die wie die Maske in Beispiel 1 hergestellt worden war, jedoch bis auf die Flächen der Zuleitungen 13" (Abb. 2) gänzlich schwarz war, wurde 3 min unter Stickstoffatmosphäre mit der Lampe DELOLUX® 03, DELO Industrieklebstoffe, Landsberg, die sich in einem Abstand von 8 cm von der Zelle befand, belichtet und anschließend für 3 h ohne Licht unter Stickstoffatmosphäre ausgehärtet. Die Platte 11 wurde mit Ethanol oder Aceton abgespült, wobei der außerhalb der Zuleitungen 13 nicht ausgehärtete Klebstoff entfernt wurde.

Es war so eine Zelle (Fig. 3(a) und 3(b)) entstanden, bei der sich durch Anlegen einer Spannung von 0.9 V an die Kontakte 12 der Flächensegmente als Kathode und die nichtgeätzte zweite Platte 17 als Anode rasch ein tief gründlich blaues Bild der kontaktierten Flächensegmente ergab. Es konnten alle mittels sieben Segmenten darstellbaren Buchstaben und Ziffern tief grünlich blau auf blaßgelbem Untergrund erzeugt werden. Die Zuleitungen 13 färbten sich nicht. Durch Abschalten der Spannung und Kurzschließen der Kontakte verschwand das Bild rasch wieder.

**Beispiel 5**

Es wurde eine Zelle gebaut wie in Beispiel 1 beschrieben.

Die Zelle wurde jedoch mit einer Lösung, die 0,06 polar an der elektrochromen Verbindung der Formel

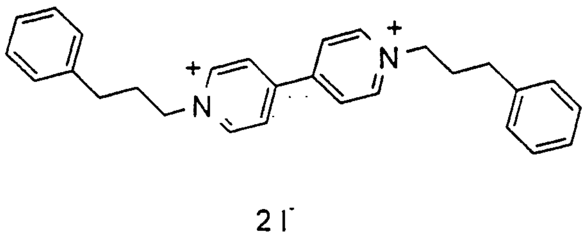

(CIV)

und 0,4 molar an UV-Absorber der Formel

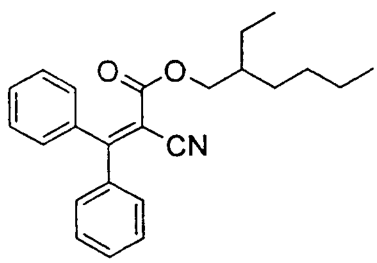

(CLI)

in wasserfreiem, sauerstofffreiem Propylencarbonat war, gefüllt.

Es war so eine Zelle (Fig. 3(a) und (b)) entstanden, bei der sich durch Anlegen einer Spannung von 1.5 V an die Kontakte 12 der Flächensegmente als Kathode und die nichtgeätzte zweite Platte 17 als Anode rasch ein tief blaues Bild der kontaktierten Flächensegmente ergab. Es konnten alle mittels sieben Segmenten darstellbaren Buchstaben und Ziffern tief blau auf farblosem Untergrund erzeugt werden. Die Zuleitungen 13 färbten sich nicht. Durch Abschalten der Spannung und Kurzschließen der Kontakte verschwand das Bild rasch wieder.

**Beispiel 5a**

Alternativ wurde die Zelle mit einer Wechselspannung von 2 V und 100 Hz betrieben. Die kontaktierten Flächensegmente färbten sich dann ebenfalls blau auf farblosem Untergrund.

**Beispiel 6**

Es wurden zwei Platten 11 und 17' nach der in Beispiel 1 beschriebenen Vorgehensweise geätzt (Fig. 4). Die isolierende Schicht wurde auf die Leitungen 13 und 13' entsprechend Beispiel 4 aufgebracht.

Dazu wurden die beiden Platten 11 und 17' auf der mit ITO leitfähig beschichteten und geätzten Seite flächig mit dem photochemisch härtbaren Acrylatkleber DELO-Photobond® 4468, DELO Industrieklebstoffe, Landsberg, bestrichen. Durch entsprechende Masken, die wie die Masken in Beispiel 1 hergestellt worden waren, bei denen jedoch nur die Kontakte 12 und die Flächensegmente 14 schwarz waren, wurde 3 min unter Stickstoffatmosphäre mit der Lampe DELOLUX® 03, DELO Industrieklebstoffe, Landsberg, die sich in einem Abstand von 8 cm von der Zelle befand, belichtet und anschließend für 3 h ohne Licht unter Stickstoffatmosphäre ausgehärtet. Die Platten 11 und 17' wurden mit Ethanol oder Aceton abgespült, wobei der nicht ausgehärtete Klebstoff von den Kontakten 12 und 12' und den Flächensegmenten 14 und 14' entfernt wurde.

Die elektrochrome Zelle wurden dann wie in Beispiel 1 beschrieben aus den beiden Platten zusammengebaut, wobei die Flächensegmente der beiden Platten deckungsgleich übereinander zu liegen kamen, und befüllt.

Durch Anlegen einer Spannung von 0.9 V an die Kontakte 12 der Platte 11 als Kathode und an die Kontakte 12' der Platte 17' als Anode bildete sich rasch ein tief grünlich blaues Bild der kontaktierten Flächensegmente aus. Es konnten alle mittels sieben Segmenten darstellbaren Buchstaben und Ziffern tief grünlich blau erzeugt werden. Die Zuleitungen 13 und 13' färbten sich nicht. Durch Abschalten der Spannung und Kurzschließen der Kontakte verschwand das Bild rasch wieder.

**Vergleichsbeispiel 7**

Es wurden zwei Platten 11 und 17' nach der in Beispiel 1 beschriebenen Vorgehensweise geätzt. Bei beiden Platten 11 und 17' wurden mittels eines Klebebandes (Tesa-Bürofilm 5013, Fa. Beiersdorf) auf der jeweils leitfähig beschichteten Seite die Kontakte 12 und 12' und die Flächensegmente 14 und 14' abgeklebt.

Als Variante wurden die Platten 11 und 17' wie in Beispiel 1 beschrieben auf der leitfähig beschichteten Seite flächig mit dem Photolack Positiv 20 der Firma Kontakt Chemie, Iffezheim beschichtet. Mit Hilfe von Belichtungsmasken, die jeweils ein Abbild der Kontakte 12 bzw. 12' und der Flächensegmente 14 und 14' als tiefschwarze Flächenelemente enthielten, wurden die Platten 11 und 17' so bedeckt, daß die Flächensegmente 14 bzw. 14' auf den Platten und ihr Abbild auf den Masken zur Deckung gebracht waren. Die so abgedeckten Platten 11 und 17' wurden durch die Belichtungsmasken wie in Beispiel 1 beschrieben belichtet. Anschließend wurde der Photolack wie in Beispiel 1 beschrieben an den belichteten Stellen entfernt.

Die so nach einer der beiden Varianten vorbereiteten Platten 11 und 17' wurden in einer Sputter-Apparatur BAS 410 der Fa. Balzers bei einem Vakuum von $<10^{-6}$ mbar und einem Argondruck von $3 \cdot 10^{-3}$ mbar mit $SiO_2$ besputtert, wobei die Heizleistung 1 kW und die Sputterrate 6 nm/min betrug. Die Schichtdicke des aufgesputterten $SiO_2$ betrug schließlich 200 nm.

Dann wurde das Klebeband abgezogen bzw. der Photolack wie in Beispiel 1 beschrieben abgelöst.

Die Zelle wurde wie in Beispiel 1 beschrieben aus den beiden Platten zusammengebaut, wobei die Flächensegmente der beiden Platten deckungsgleich übereinander zu liegen kamen.

Nun wurde die Zelle unter Stickstoff- oder Argonatmosphäre mit der Öffnung 16 nach unten senkrecht so in eine Schale gestellt, die eine Lösung enthielt, die 0,06 molar an der elektrochromen Verbindung der Formel

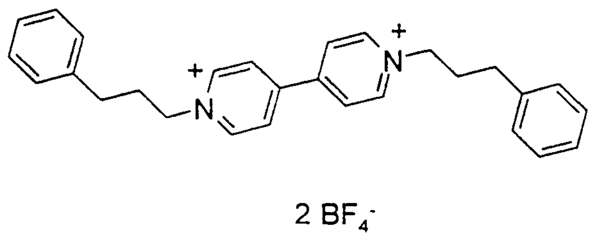

(CLV)

und 0,06 molar an der elektrochromen Verbindung der Formel

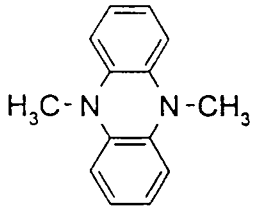

(CLVI)

und 0,4 molar an UV-Absorber der Formel

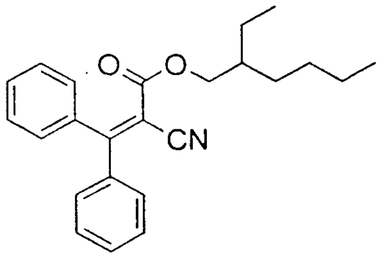

(CLI)

in wasserfreiem, sauerstofffreiem Propylencarbonat war. Dabei befand sich die Öffnung 16 der Zelle unterhalb des Flüssigkeitsspiegels in der Schale. Die Schale mit der Zelle wurde in einen Exsiccator gestellt, der auf 0.05 mbar evakuiert und anschließend vorsichtig mit Stickstoff belüftet wurde. Dabei stieg die elektrochrome Lösung in die Zelle hinein und füllte bis auf eine kleine Blase das gesamte Volumen aus. Die Zelle wurde aus der Lösung entnommen, unter Stickstoffatmoshäre an der Öffnung 16 gereinigt, indem sie mit einem Papiertuch abgeputzt wurde, und anschließend mit dem photohärtenden Epoxikleber DELO-Katiobond® 4594, DELO Industrieklebstoffe, Landsberg, verdickt mit 2% Kieselgel-Aerosil, unter Stickstoffatmosphäre verschlossen. Zuletzt wurde unter Stickstoffatmosphäre 10 min mit Tageslicht in der Nähe eines Fensters belichtet und bei Raumtemperatur über Nacht ausgehärtet.

Bei einer anderen Zelle wurde nach oben beschriebener Behandlung die Einfüllöffnung mit dem photochemisch härtbaren Acrylatkleber DELO-Photobond® 4497, DELO Industrieklebstoffe, Landsberg, verschlossen. Anschließend wurde 1 min unter einem Stickstoffstrom mit der Lampe DELOLUX® 03, DELO Industrieklebstoffe, Landsberg, die sich in einem Abstand von 8 cm zur verklebten Öffnung 16 befand, belichtet und bei Raumtemperatur über Nacht unter Stickstoffatmosphäre ausgehärtet.

Durch Anlegen einer Spannung von 0.9 V an die Kontakte 12 der der Platte 11 als Kathode und an die Kontakte 12' der Platte 17' als Anode bildete sich rasch ein tief grünlich blaues Bild der kontaktierten Flächensegmente aus. Es konnten so alle mittels sieben Segmenten darstellbaren Buchstaben und Ziffern tief grünlich blau erzeugt werden. Die Zuleitungen 13 und 13' färbten sich nicht. Durch Abschalten der Spannung und Kurzschließen der Kontakte verschwand das Bild rasch wieder.

**Vergleichsbeispiel 7a**

Alternativ wurde die Zelle auch mit Wechselspannung (sinusförmig) von 1.5 V und 200 Hz betrieben. Die kontaktierten Flächensegmente färbten sich grünlich blau auf blaß gelbem Untergrund. Die Zuleitungen 13 und 13' färbten sich nicht.

**Vergleichsbeispiel 8**

In eine Glasplatte 51 (10x10 $cm^2$) wurde zwei Löcher 52 mit einem Durchmesser von 1,0 mm gebohrt (Figur 5a). Anschließend wurde die Glasplatte beidseitig und auch in den Löchern mit ITO besputtert.

Auf die eine Seite dieser Glasplatte wurde im Bereich der Löcher mit einem Klebeband (Tesa-Film 5013, Fa. Beiersdorf) eine Fläche von jeweils 1 x 1 $cm^2$ abgeklebt. Die andere Seite der Glasplatte wurde mit einem handelsüblichen Photolack, Positiv 20 der Firma Kontakt Chemie, Iffezheim, besprüht und im Dunkeln bei 50 bis 70 °C 1 h lang getrocknet. Dann wurde die Lackschicht mit einer Belichtungsmaske 53 gemäß Fig. 5b bedeckt, die schwarze Bereiche in Form von Quadraten 54 in einer transparenten Umgebung enthielt. Die Belichtungsmaske 53 gemäß Fig. 5b wurde durch Bedrucken einer Folie nach einer im Computer erstellten Vorlage mit einem Laserdrucker hergestellt. Durch die Belichtungsmaske 53 wurde die Photolackschicht mit dem UV-Licht einer Quecksilber-Lampe (HBO 200W/2 der Firma Osram) 3 min belichtet. Die Folie wurde anschließend entfernt und die Lackschicht in einem Natronlaugebad (7 g Natriumhydroxid pro Liter Wasser) an den belichteten Stellen abgespült. Die so vorbereitete Glasplatte wurde in ein Bad aus 67 g $FeCl_2$ x 4 $H_2O$, 6 g SnCl, x 2 $H_2O$, 104 ml Wasser und 113 ml 37-gew.-proz. Salzsäure gelegt, wodurch die ITO-Schicht an den lackfreien, ehemals belichteten Stellen abgelöst wurde. Die verbliebene Lackschicht wurde mit Aceton entfernt. Das Klebeband wurde ebenfalls entfernt.

Die Rückseite der Platte wurde nun flächig mit dem Klebeband abgeklebt. Die geätzte Seite wurde erneut wie oben beschrieben mit Photolack beschichtet. Die Belichtung erfolgte durch eine Maske 61 gemäß Fig. 6a, die schwarze Flächensegmente 62 in Form von Schriftzügen oder Symbolen und Anschlüsse 63 in transparenter Umgebung enthielt, unter Bedingungen, wie sie oben beschrieben sind.

Die so vorbereitete Platte wurde in einer Sputter-Apparatur BAS 410 der Fa. Balzers bei einem Vakuum von $< 10^{-6}$ mbar und einem Argondruck von $3 \cdot 10^{-3}$ mbar mit $SiO_2$ besputtert, wobei die Heizleistung 1 kW und die Sputterrate 6 nm/min betrug. Die Schichtdicke des aufgesputterten $SiO_2$ betrug schließlich 200 nm. Die verbliebene Lackschicht wurde mit Aceton entfernt. Das Klebeband wurde ebenfalls entfernt.

Schließlich erhielt man eine Glasplatte 64 gemäß Fig. 6b (Aufsicht), die Flächensegmente 65 und Anschlüsse 66 trug, die nicht isolierend abgedeckt waren, während die gesamte restliche Fläche 67 dieser Seite der Platte mit $SiO_2$ überzogen war. In die Löcher 68 der Platte 64 wurde von der Rückseite gemäß Fig. 7 (Platte 71, Loch 72) je ein 0,5 mm Kupferdraht 73 gesteckt, so daß er nicht auf der anderen Seite der Platte herausragte. Mittels eines Tropfens Leitsilber 74 wurde er befestigt und mit der ITO-Schicht 75 leitfähig verbunden.

Aus dieser Platte wurde nun analog zu Beispiel 1 eine elektrochrome Zelle gebaut, wobei die zweite Platte eine rechteckige Form hatte und die beiden Platten so zusammengebaut wurden, daß die Anschlüsse 66 (Fig. 6 b) von der zweiten Platte nicht abgedeckt wurden (vgl. Fig. 3a und 3b). Die Zelle wurde wie in Beispiel 1 beschrieben gefüllt und verschlossen.

An die Anschlüsse 66 sowie an die überstehende Kante der zweiten Platte der Vorrichtung wurden jeweils Kupferdrähte mittels Leitsilber angelötet.

Es war so eine Zelle entstanden, bei der sich durch Anlegen einer Spannung von 0,9 V an die Kabel der Flächensegmente als Kathode und an das Kabel der nichtgeätzten zweiten Platte als Anode rasch ein tief grünlich blaues Bild der kontaktierten Flächensegmente ergab. Es konnten so beliebig viele dieser Flächensegmente (Symbole, Wörter, Zahlen) grünlich blau auf farblosem Untergrund erzeugt werden. Die nicht kontaktierten Flächensegmente blieben farblos. Durch Abschalten der Spannung und Kurzschließen der Kontakte verschwand das Bild rasch wieder.

## Patentansprüche

1. Elektrochrome Anzeigevorrichtung, enthaltend ein Paar Glas- oder Kunststoffplatten oder Kunststoffolien, von denen mindestens eine Platte oder Folie, vorzugsweise beide Platten oder Folien auf jeweils einer Seite mit einer elektrisch leitfähigen Beschichtung versehen sind, von denen wenigstens eine Platte oder Folie und ihre leitfähige Beschichtung transparent sind, von denen die andere verspiegelt sein kann und von denen wenigstens bei einer der beiden Platten oder Folien die elektrisch leitfähige Schicht in getrennte, einzeln kontaktierte Flächensegmente, die jeweils eine elektrische Zuleitung von einer Kante der zugehörigen Platte oder Folie aufweisen, aufgeteilt ist, wobei die Platten oder Folien über einen Dichtungsring auf den Seiten ihrer leitfähigen Beschichtung zusammengefügt sind, das Volumen, gebildet aus den beiden Platten oder Folien und dem Dichtungsring, mit einem elektrochromen Medium gefüllt ist, die elektrischen Zuleitungen zu den Flächensegmenten von dem elektrochromen Medium elektrisch isoliert sind und die elektrischen Zuleitungen zu den Flächensegmenten mit einer elektrisch isolierenden Schicht überzogen sind, **dadurch gekennzeichnet, daß** als elektrisch isolierende Schicht eine organische, makromolekulare Verbindung oder, wenn die Zuleitungen aus Metall bestehen, als elektrisch isolierende Schicht, das Oxid des Metalls verwendet wird.

2. Elektrochrome Anzeigevorrichtung nach Anspruch 1, **dadurch gekennzeichnet, daß** die elektrisch isolierende Schicht transparent ist.

3. Elektrochrome Anzeigevorrichtung nach Anspruch 2, **dadurch gekennzeichnet, daß** als makromolekulare Verbindung ein Klebstoff oder Lack verwendet wird.

4. Elektrochrome Anzeigevorrichtung nach Anspruch 3, **dadurch gekennzeichnet, daß** als Klebstoff ein thermisch oder photochemisch oder nach photochemischer Initiierung thermisch härtender Epoxikleber verwendet wird.

5. Elektrochrome Anzeigevorrichtung nach Anspruch 4, **dadurch gekennzeichnet, daß** als mit Licht härtender Klebstoff ein photochemisch härtender Acrylatkleber oder ein photochemisch oder nach photochemischer Initiierung bei Raumtemperatur härtender Epoxikleber verwendet wird.

**6.** Elektrochrome Anzeigevorrichtung nach einem der Ansprüche 1 bis 5, **dadurch gekennzeichnet, daß** das elektrochrome Medium mindestens ein Paar von Redoxsubstanzen enthält, von denen eine reduzierbar und die andere oxidierbar ist, wobei beide farblos oder nur schwach gefärbt sind und nach Anlegen einer Spannung an die elektrochrome Vorrichtung die eine Substanz reduziert und die andere oxidiert wird, wobei wenigstens eine farbig wird und nach Abschalten der Spannung sich die beiden ursprünglichen Redoxsubstanzen wieder zurückbilden und die elektrochrome Vorrichtung sich entfärbt.

**7.** Elektrochrome Anzeigevorrichtung nach einem der Ansprüche 1 bis 6, wobei das elektrochrome Medium eine elektrochrome Substanz der Formel

$$Y\text{-}[\text{-}(\text{-}B\text{-}Z\text{-})_a\text{-}(\text{-}B\text{-}Y\text{-})_b\text{-}]_c\text{-}B\text{-}Z \qquad (I),$$

worin
Y und Z unabhängig voneinander für einen Rest $OX_2$ oder $RED_1$ stehen, wobei aber mindestens ein Y für $OX_2$ und mindestens ein Z für $RED_1$ steht,
wobei

$OX_2$ für den Rest der Formel (IIa)

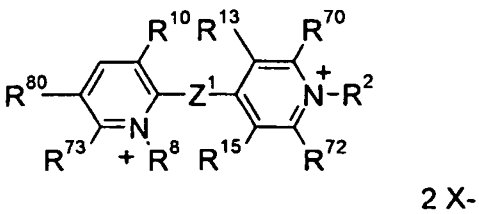

(IIa)

steht,
worin
$R^2$ und $R^8$ unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten,
$R^{15}$ Wasserstoff bedeutet,
$R^{10}$; $R^{13}$ unabhängig voneinander Wasserstoff oder paarweise eine $-(CH_2)_2-$, $-(CH_2)_3-$ oder -CH=CH-Brücke bedeuten,
$R^{70}$, $R^{72}$, $R^{73}$ und $R^{80}$ unabhängig voneinander Wasserstoff oder $C_1$- bis $C_6$-Alkyl bedeuten oder
$R^{70}$; $R^{13}$ und/oder $R^{73}$; $R^{80}$ gemeinsam eine -CH=CH-CH=CH-Brücke bilden,
$Z^1$ eine direkte Bindung, -CH=CH-, $-C(CH_3)=CH-$, -C(CN)=CH-, -CCl=CCl-, -C(OH)=CH-, -CCl=CH-, -C C-, -CH=N-N=CH-, $-C(CH_3)=N-N=C(CH_3)-$ oder -CCl=N-N=CCl- bedeutet, und
$X^-$ ein Anion bedeutet

oder $OX_2$ für den Rest der Formel (V)

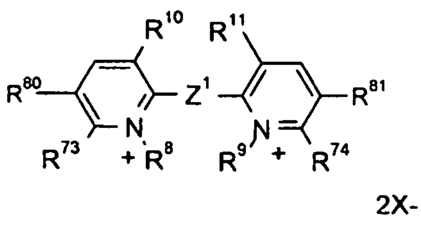

(V)

steht,

worin
$R^8$ und $R^9$ unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten,
$R^{10}$; $R^{11}$ unabhängig voneinander Wasserstoff oder paarweise eine $-(CH_2)_2-$, $-(CH_2)_3-$ oder -CH=CH-Brücke bedeuten,
$R^{73}$; $R^{80}$ und/oder $R^{74}$; $R^{81}$ gemeinsam eine -CH=CH-CH=CH-Brücke bilden,
$Z^1$ eine direkte Bindung, -CH=CH-, $-C(CH_3)=CH-$, -C(CN)=CH-, -CCl=CCl-, -C(OH)=CH-, -CCl=CH-, -C C-, -CH=N-N=CH-, $-C(CH_3)=N-N=C(CH_3)-$ oder -CCl=N-N=CCl- bedeutet, und
$X^-$ ein Anion bedeutet

$RED_1$ Für den Rest eines reversibel elektrochemisch oxidierbaren Redox-systems steht,
B für ein Brückenglied steht,

wobei die Bindung von den Resten der Formeln (IIa) oder (V) zur Brücke B über einen der Reste $R^2$, $R^8$ und/oder $R^9$ erfolgt und diese Reste dann für eine direkte Bindung stehen,
c für eine ganze Zahl von 0 bis 1000 steht, und
a und b unabhängig voneinander für eine ganze Zahl von 0 bis 100 stehen, umfasst.

**8.** Elektrochrome Anzeigevorrichtung nach einem der Ansprüche 1 bis 6, wobei das elektrochrome Medium eine elektrochrome Substanz der Formeln

$OX_2$-B-$RED_1$ (Ia),

$OX_2$-B-$RED_1$-B-$OX_2$ (Ib),

$RED_1$-B-$OX_2$-B-$RED_1$ (Ic),

oder

$OX_2$-(B-$RED_1$-B-$OX_2$)d-B-$RED_1$ (Id)

worin
$OX_2$, $RED_1$ und B die in Anspruch 11 angegebene Bedeutung haben und
d für eine ganze Zahl von 1 bis 5 steht.

**9.** Elektrochrome Anzeigevorrichtung nach Anspruch 7 oder 8,
worin
$OX_2$, a, b, c und d die in Anspruch 7 und 8 angegebene Bedeutung besitzt,
$RED_1$ für einen Rest der Formeln

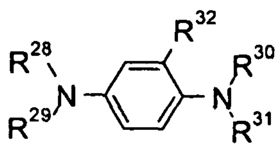

(X),

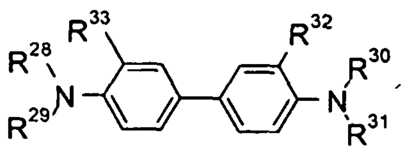

(XI),

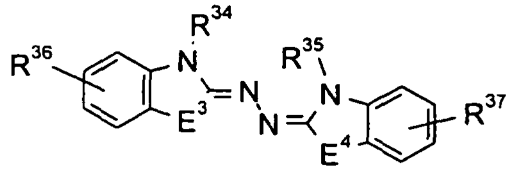

(XII),

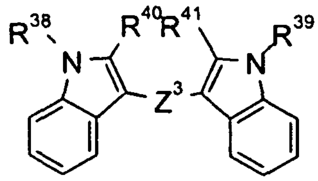

(XIII),

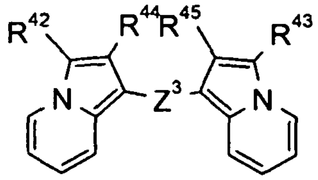

(XIV),

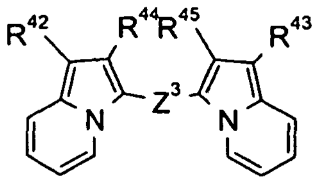

(XV),

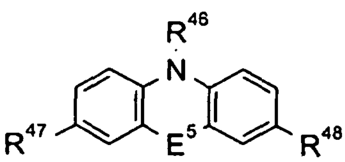

(XVI),

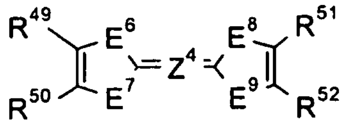

(XVII),

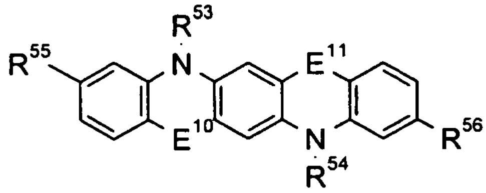

(XVIII),

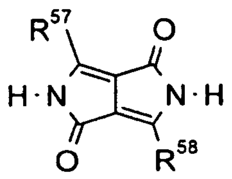

(XIX),

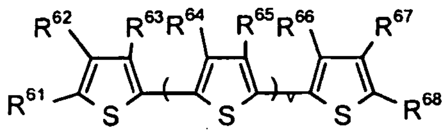

(XX),

worin

$R^{28}$ bis $R^{31}$, $R^{34}$, $R^{35}$, $R^{38}$, $R^{39}$, $R^{46}$, $R^{53}$ und $R^{54}$ unabhängig voneinander $C_1$- bis $C_{18}$-Alkyl, $C_2$- bis $C_{12}$-Alkenyl, $C_4$- bis $C_7$-Cycloalkyl, $C_7$- bis $C_{15}$-Aralkyl oder $C_6$- bis $C_{10}$-Aryl bedeuten,
$R^{32}$, $R^{33}$, $R^{36}$, $R^{37}$, $R^{40}$, $R^{41}$, $R^{42}$ bis $R^{45}$, $R^{47}$, $R^{48}$, $R^{49}$ bis $R^{52}$ und $R^{55}$ bis $R^{58}$ unabhängig voneinander Wasserstoff, $C_1$- bis $C_4$-Alkyl, $C_1$- bis $C_4$-Alkoxy, Halogen, Cyan, Nitro, $C_1$- bis $C_4$-Alkoxy-carbonyl, $C_6$- bis $C_{10}$-Aryl bedeuten
und
$R^{57}$ und $R^{58}$ zusätzlich einen aromatischen oder quasiaromatischen fünf- oder sechsgliedrigen heterocyclischen Ring, der gegebenenfalls benzanneliert ist, bedeuten und $R^{48}$ zusätzlich $NR^{75}R^{76}$ bedeutet oder
$R^{49}$; $R^{50}$ und/oder $R^{51}$; $R^{52}$ eine $-(CH_2)_3-$, $-(CH_2)_4-$, $-(CH_2)_5-$ oder -CH=CH-CH=CH-Brücke bilden,
$Z^3$ eine direkte Bindung, eine -CH=CH- oder -N=N-Brücke bedeutet,
$=Z^4=$ eine direkte Doppelbindung, eine =CH-CH= oder =N-N=-Brücke bedeutet,
E3 bis $E^5$, $E^{10}$ und $E^{11}$ unabhängig voneinander O, S, $NR^{59}$ oder $C(CH_3)_2$ bedeuten und
$E^5$ zusätzlich C=O oder $SO_2$ bedeutet,
$E^3$ und $E^4$ unabhängig voneinander zusätzlich -CH=CH- bedeuten können,
$E^6$ bis $E^9$ unabhängig voneinander S, Se oder $NR^{59}$ bedeuten,
$R^{59}$; $R^{75}$ und $R^{76}$ unabhängig voneinander $C_1$- bis $C_{12}$-Alkyl, $C_2$- bis $C_8$-Alkenyl, $C_4$- bis $C_7$-Cycloalkyl, $C_7$- bis $C_{15}$-Aralkyl, $C_6$- bis $C_{10}$-Aryl bedeuten,
und

$R^{75}$ zusätzlich Wasserstoff bedeutet oder $R^{75}$ und $R^{76}$ in der Bedeutung von $NR^{75}R^{76}$ gemeinsam mit dem N-Atom, an das sie gebunden sind, einen fünf- oder sechsgliedrigen Ring bedeuten, der gegebenenfalls weitere Heteroatome enthält,
$R^{61}$ bis $R^{68}$ unabhängig voneinander Wasserstoff, $C_1$- bis $C_6$-Alkyl, $C_1$- bis $C_4$-Alkoxy, Cyan, $C_1$- bis $C_4$-Alkoxycarbonyl oder $C_6$- bis $C_{10}$-Aryl bedeuten und
$R^{61}$ $R^{62}$ und $R^{67}$; $R^{68}$ unabhängig voneinander zusätzlich eine $-(CH_2)_3-$, $-(CH_2)_4-$ oder -CH=CH-CH=CH-Brücke bilden oder
$R^{62}$; $R^{63}$, $R^{64}$ ; $R^{65}$ und $R^{66}$; $R^{67}$ eine $-O-CH_2CH_2-O-$ oder $-O-CH_2CH_2CH_2-O-$Brücke bilden,
v eine ganze Zahl zwischen 0 und 10.000 bedeutet,

steht,
wobei die Bindung zum Brückenglied B über einen der Reste $R^2$, $R^8$, $R^9$, $R^{28}$ bis $R^{58}$, $R^{61}$, $R^{62}$, $R^{67}$, $R^{68}$ oder im Falle, daß einer der Reste $E^1$ oder $E^2$ für $NR^1$ oder einer der Reste $E^3$ bis $E^{11}$ für $NR^{59}$ steht, über$R^1$ bzw. $R^{59}$ erfolgt und die genannten Reste dann für eine direkte Bindung stehen, und
B für eine Brücke der Formeln $-(CH_2)_n-$ oder
$-[Y^1_s(CH_2)_m-Y^2]_o-(CH_2)_p-Y^3_q-$ steht, die durch $C_1$- bis $C_4$-Alkyl, $C_1$- bis $C_4$-Alkoxy, Halogen oder Phenyl substituiert sein kann,

$Y^1$ bis $Y^3$ unabhängig voneinander für O, S, $NR^{60}$, COO, CONH, NHCONH, Cyclopentandiyl, Cyclohexandiyl, Phenylen oder Naphthylen stehen,
$R^{60}$ $C_1$- bis $C_6$-Alkyl, $C_2$- bis $C_6$-Alkenyl, $C_4$- bis $C_7$-Cycloalkyl, $C_7$- bis $C_{15}$-Aralkyl oder $C_6$- bis $C_{10}$-Aryl bedeutet,

n eine ganze Zahl von 1 bis 12 bedeutet,
m und p unabhängig voneinander eine ganze Zahl von 0 bis 8 bedeuten,
o eine ganze Zahl von 0 bis 6 bedeutet und
q und s unabhängig voneinander 0 oder 1 bedeuten, umfasst.

**10.** Verfahren zur Herstellung einer elektrochromen Anzeigevorrichtung aus einem der Ansprüche 1 bis 9, **dadurch gekennzeichnet, daß** die Flächensegmente und ihre Zuleitungen zuerst aus einer flächigen, leitfähigen Beschichtung herausgearbeitet werden oder auf die Platten oder Folien aufgebracht werden und anschließend die elektrisch isolierende Schicht auf die Zuleitungen aufgebracht wird.

**11.** Verfahren zur Herstellung einer elektrochromen Anzeigevorrichtung nach Anspruch 10, **dadurch gekennzeichnet, daß** als elektrisch isolierende Schicht Klebstoff oder Lack auf die Zuleitungen aufgebracht wird, der nach dem Aufbringen ausgehärtet wird.

**12.** Verfahren zur Herstellung einer elektrochromen Anzeigevorrichtung nach Anspruch 11, **dadurch gekennzeichnet, daß** ein mit Licht härtender Klebstoff flächig auf die leitfähig beschichtete Seite der Platte oder Folie aufgetragen wird, die Flächen der Zuleitungen belichtet werden, dabei der Klebstoff an den belichteten Stellen augehärtet wird und anschließend der nicht gehärtete Klebstoff an den unbelichteten Stellen entfernt wird.

**13.** Verfahren zur Herstellung einer elektrochromen Anzeigevorrichtung nach einem der Ansprüche 6 bis 9, worin die Zuleitungen aus Metall bestehen, **dadurch gekennzeichnet, daß** die metallischen Zuleitungen zur Herstellung der elektrisch isolierenden Schicht oberflächlich oxidiert werden.

**Claims**

**1.** Electrochromic display device comprising a pair of glass or plastic plates or plastic films of which at least one plate or film, preferably both plates or films, is/are provided on one side each with an electrically conductive coating and of which at least one plate or film and its conductive coating is transparent and of which the other can be mirrored and in which the electrically conductive layer of at least one of the two plates or films is divided into separate segments which are individually connected to a power source and each has an electric lead from one edge of the respective plate or film, where the plates or films are joined via a sealing ring on the sides on which they are conductively coated, the volume formed by the two plates or films and the sealing ring is filled with an electrochromic medium, the electric leads to the segments are electrically insulated from the electrochromic medium and the electric leads to the segments are coated with an electrically insulating layer, **characterized in that** an organic, macromolecular compound is used as electrically insulating layer or, if the power leads consist of metal, the oxide of the metal is

used as electrically insulating layer.

2. Electrochromic display device according to Claim 1, **characterized in that** the electrically insulating layer is transparent.

3. Electrochromic display device according to Claim 2, **characterized in that** the macromolecular compound used is an adhesive or varnish/paint.

4. Electrochromic display device according to Claim 3, **characterized in that** the adhesive used is an epoxy adhesive which cures thermally or photochemically or thermally after photochemical initiation.

5. Electrochromic display device according to Claim 4, **characterized in that** the photo-curable adhesive used is a photochemically curing acrylate adhesive or an epoxy adhesive which cures photochemically or at room temperature after photochemical initiation.

6. Electrochromic display device according to any of Claims 1 to 5, **characterized in that** the electrochromic medium contains at least one pair of redox substances, of which one is reducible and the other is oxidizable and both are colourless or only slightly coloured and after application of an electric potential to the electrochromic device one substance is reduced and the other is oxidized so that at least one becomes coloured and after switching off the electric potential the two original redox substances are formed again and the electrochromic device loses its colour.

7. Electrochromic display device according to any of Claims 1 to 6, wherein the electrochromic medium comprises an electrochromic substance of the formula

$$Y\text{-}[\text{-}(\text{-}B\text{-}Z\text{-})_a\text{-}(\text{-}B\text{-}Y\text{-})_b\text{-}]_c\text{-}B\text{-}Z \qquad \text{(I)},$$

where
Y and Z each represent, independently of one another, a radical $OX_2$ or $RED_1$, but at least one Y represents $OX_2$ and at least one Z represents $RED_1$,
where

$OX_2$ represents the radical of the formula (IIa)

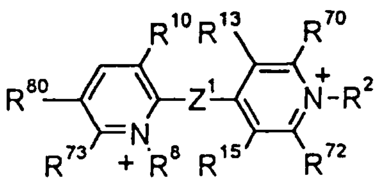

(IIa)

2 X-

where
$R^2$ and $R^8$ are, independently of one another, $C_1$- to $C_{18}$-alkyl , $C_2$- to $C_{12}$-alkenyl, $C_4$- to $C_7$-cycloalkyl, $C_7$- to $C_{15}$-aralkyl or $C_6$- to $C_{10}$-aryl,
$R^{15}$ is hydrogen,
$R^{10}$; $R^{13}$ are, independently of one another, hydrogen or together represent a $-(CH_2)_2-$,$-(CH_2)_3-$ or -CH=CH- bridge,
$R^{70}$, $R^{72}$, $R^{73}$ and $R^{80}$ are, independently of one another, hydrogen or $C_1$- to $C_6$-alkyl or
$R^{70}$ ; $R^{13}$ and/or $R^{73}$ ; $R^{80}$ together form a -CH=CH-CH=CH- bridge,
$Z^1$ is a direct bond, -CH=CH-, $-C(CH_3)=CH-$, -C(CN)=CH-, -CCl=CCl-, -C(OH)=CH-, -CCl=CH-, -C C-, -CH=N-N=CH-, $-C(CH_3)=N-N=C(CH_3)-$ or -CCl=N-N=CCl-, and
$X^-$ is an anion

or $OX_2$ is the radical of the formula (V)

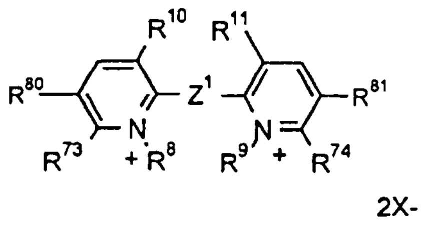

(V)

where
$R^8$ and $R^9$ are, independently of one another, $C_1$- to $C_{18}$-alkyl, $C_2$- to $C_{12}$-alkenyl, $C_4$- to $C_7$-cycloalkyl, $C_7$- to $C_{15}$-aralkyl or $C_6$- to $C_{10}$-aryl,
$R^{10}$ ; $R^{11}$ are, independently of one another, hydrogen or together represent a $-(CH_2)_2-$, $(CH_2)_3$- or -CH=CH- bridge,
$R^{73}$ ; $R^{80}$ and/or $R^{74}$; $R^{81}$ together form a -CH=CH-CH=CH- bridge,
$Z^1$ is a direct bond, -CH=CH-, $-C(CH_3)=CH-$, -C(CN)=CH-, -CCl=CCl-, -C(OH)=CH-, -CCl=CH-, -C C-, -CH=N-N=CH-, $-C(CH_3)=N-N=C(CH_3)-$ or -CCl=N-N=CCl-, and

$X^-$ is an anion
$RED_1$ represents the radical of a reversibly electrochemically oxidizable redox system,
B represents a bridge,

where the radicals of the formulae (IIa) or (V) are bound to the bridge B via one of the radicals $R^2$, $R^8$ and/or $R^9$ and these radicals then represent a direct bond,

c represents an integer from 0 to 1000, and
a and b each represent, independently of one another, an integer from 0 to 100.

**8.** Electrochromic display device according to any of Claims 1 to 6, wherein the electrochromic medium comprises an electrochromic substance of the formula

$OX_2$-B-$RED_1$ (Ia) ,

$OX_2$-B-$RED_1$-B-$OX_2$ (Ib),

$RED_1$-B-$OX_2$-B-$RED_1$ (Ic),

or

$OX_2$- (B-$RED_1$-B-$OX_2$)$_d$-B-$RED_1$ (Id)

where
$OX_2$, $RED_1$ and B are as defined in Claim 7 and
d represents an integer from 1 to 5.

**9.** Electrochromic display device according to Claim 7 or 8,
where
$OX_2$, a, b, c and d are as defined in Claim 7 and 8,
$RED_1$ represents a radical of the formulae

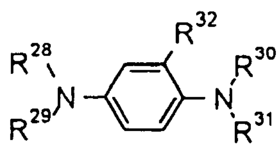

(X),

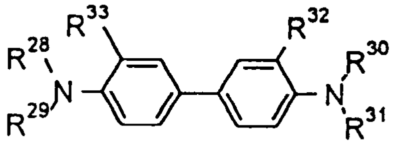

(XI),

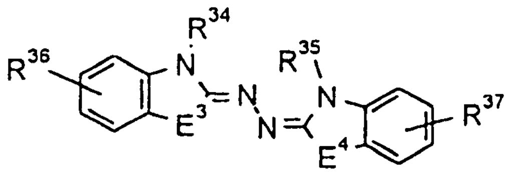

(XII),

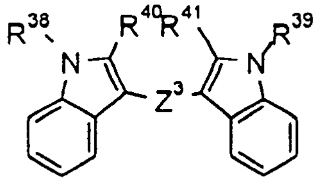

(XIII),

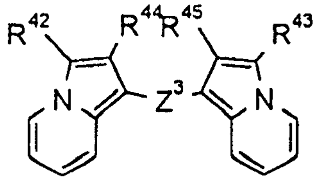

(XIV),

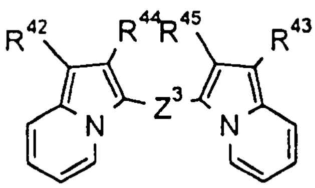

(XV),

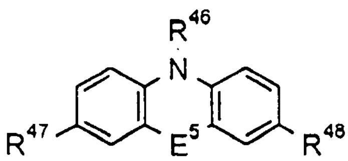

(XVI),

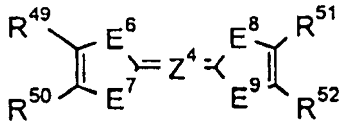

(XVII),

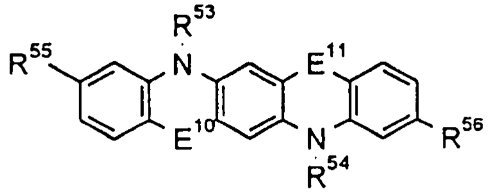

(XVIII),

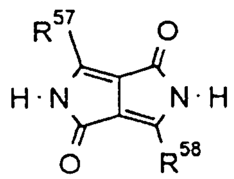

(XIX),

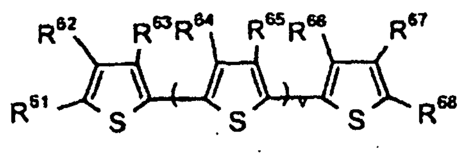

(XX),

where

$R^{28}$ to $R^{31}$, $R^{34}$, $R^{35}$, $R^{38}$, $R^{39}$, $R^{46}$, $R^{53}$ and $R^{54}$ are, independently of one another, $C_1$- to $C_{18}$-alkyl, $C_2$- to $C_{12}$-alkenyl , $C_4$- to $C_7$-cycloalkyl, $C_7$- to $C_{15}$-aralkyl or $C_6$- to $C_{10}$-aryl,
$R^{32}$, $R^{33}$, $R^{36}$, $R^{37}$, $R^{40}$, $R^{41}$, $R^{42}$ to $R^{45}$, $R^{47}$, $R^{48}$, $R^{49}$ to $R^{52}$ and $R^{55}$ to $R^{58}$ are, independently of one another, hydrogen, $C_1$- to $C_4$-alkyl , $C_1$- to $C_4$-alkoxy, halogen, cyano, nitro, $C_1$- to $C_4$-alkoxycarbonyl, $C_6$- to $C_{10}$-aryl and
$R^{57}$ and $R^{58}$ may also each be an aromatic or pseudoaromatic, five- or six-membered heterocyclic ring which may optionally be benzo-fused and $R^{48}$ may also be $NR^{75}R^{76}$ or
$R^{49}$; $R^{50}$ and/or $R^{51}$; $R^{52}$ form a $-(CH_2)_3-$, $-(CH_2)_4-$,$-(CH_2)_5-$ or -CH=CH-CH=CH- bridge,
$Z^3$ is a direct bond, a -CH=CH- or -N=N- bridge,
$=Z^4=$ is a direct double bond, a =CH-CH= or =N-N= bridge,
$E^3$ to $E^5$, $E^{10}$ and $E^{11}$ are, independently of one another, O, S, $NR^{59}$ or $C(CH_3)_2$ and
$E^5$ may also be C=O or $SO_2$,
$E^3$ and $E^4$ may also be, independently of one another, -CH=CH-,
$E^6$ to $E^9$ are, independently of one another, S, Se or $NR^{59}$,
$R^{59}$; $R^{75}$ and $R^{76}$ are, independently of one another, $C_1$- to $C_{12}$-alkyl, $C_2$- to $C_8$-alkenyl, $C_4$- to $C_7$-cycloalkyl, $C_7$- to $C_{15}$-aralkyl, $C_6$- to $C_{10}$-aryl,
and
$R^{75}$ may also be hydrogen or $R^{75}$ and $R^{76}$ in $NR^{75}R^{76}$ may also, together with the N atom to which they are bound, represent a five- or six-membered ring which may optionally contain further heteroatoms,

$R^{61}$ to $R^{68}$ are, independently of one another, hydrogen, $C_1$- to $C_6$-alkyl, $C_1$- to $C_4$-alkoxy, cyano, $C_1$- to $C_4$-alkoxycarbonyl or $C_6$- to $C_{10}$-aryl and

$R^{61}$; $R^{62}$ and $R^{67}$; $R^{68}$ may also, independently of one another, form a - $-(CH_2)_3-$, $-(CH_2)_4-$ or -CH=CH-CH=CH-bridge, or

$R^{62}$; $R^{63}$; $R^{64}$ ; $R^{65}$ and $R^{66}$; $R^{67}$ form an $-O-CH_2CH_2-O-$ or $-O-CH_2CH_2CH_2-O-$ bridge,

v is an integer from 0 to 10,000,

where bonding to the bridge B occurs via one of the radicals $R^2$, $R^8$, $R^9$, $R^{28}$ to $R^{58}$, $R^{61}$, $R^{62}$, $R^{67}$, $R^{68}$ or, if one of the radicals $E^1$ or $E^2$ represents $NR^1$ or one of the radicals $E^3$ to $E^{11}$ represents $NR^{59}$, via $R^1$ or $R^{59}$ and the said radicals then represent a direct bond, and

B represents a bridge of the formula $-(CH_2)_n-$ or $-[Y^1_s (CH_2)_m-Y^2]_o-CH_2)_p-Y^3_q-$ which may be substituted by $C_1$- to $C_4$-Aralkyl, $C_1$- to $C_4$-alkoxy, halogen or phenyl,

$Y^1$ to $Y^3$ represent, independently of one another, O, S, $NR^{60}$, COO, CONH, NHCONH, cyclopentanediyl, cyclohexanediyl, phenylene or naphthylene,

$R^{60}$ is $C_1$- to $C_6$-alkyl, $C_2$- to $C_6$-alkenyl, $C_4$- to $C_7$-cycloalkyl, $C_7$- to $C_{15}$-aralkyl or $C_6$- to $C_{10}$-aryl,

n is an integer from 1 to 12,

m and p are each, independently of one another, an integer from 0 to 8,

o is an integer from 0 to 6 and

q and s are, independently of one another, 0 or 1.

**10.** Method of producing an electrochromic display device according to any of Claims 1 to 9, **characterized in that** the segments and their power leads are first produced by removal of material from a continuous conductive coating or are applied to the plates or films and the electrically insulating layer is subsequently applied to the power leads.

**11.** Method of producing an electrochromic display device according to Claim 10, **characterized in that** the electrically insulating layer applied to the power leads is adhesive or varnish/paint which is cured after application.

**12.** Method of producing an electrochromic display device according to Claim 11, **characterized in that** a photo-curable adhesive is applied to the entire area of the conductively coated side of the plate or film, the segments of the power leads are illuminated, thus curing the adhesive at the illuminated places, and the uncured adhesive is subsequently removed from the unilluminated places.

**13.** Method of producing an electrochromic display device according to any of Claims 6 to 9 in which the power leads consist of metal, **characterized in that** the metallic power leads are oxidized on their surface to produce the electrically insulating layer.

## Revendications

**1.** Dispositif d'affichage électrochrome, contenant une paire de plaques en verre ou en matière plastique ou de feuilles en matière plastique, dont au moins une plaque ou feuille, avantageusement les deux plaques ou feuilles, sont pourvues, d'un côté chacune, d'un revêtement électroconducteur, dont au moins une plaque ou feuille et son revêtement conducteur sont transparents, dont l'autre peut être rendue réfléchissante et dont la couche électroconductrice d'au moins l'une des deux plaques ou feuilles est divisée en segments bidimensionnels séparés, connectés individuellement, comprenant chacun une amenée électrique venant d'une arête de la plaque ou feuille respective, les plaques ou feuilles étant assemblées au moyen d'une bague d'étanchéité sur les côtés de leur revêtement conducteur, le volume défini par les deux plaques ou feuilles et la bague d'étanchéité est rempli d'un milieu électrochrome, les amenées électriques relatives aux segments bidimensionnels sont isolées électriquement du milieu électrochrome et les amenées électriques relatives aux segments bidimensionnels sont revêtues d'une couche électro-isolante, **caractérisé en ce qu'**un composé organique macromoléculaire est utilisé comme couche électro-isolante ou, lorsque les amenées sont en métal, c'est l'oxyde du métal qui est utilisé comme couche électro-isolante.

**2.** Dispositif d'affichage électrochrome suivant la revendication 1, **caractérisé en ce que** la couche électro-isolante est transparente.

**3.** Dispositif d'affichage électrochrome suivant la revendication 2, **caractérisé en ce qu'**on utilise comme composé macromoléculaire un adhésif ou un vernis.

4. Dispositif d'affichage électrochrome suivant la revendication 3, **caractérisé en ce qu'**on utilise comme adhésif un adhésif époxy durcissant par voie thermique ou photochimique ou durcissant par voie thermique après amorçage photochimique.

5. Dispositif d'affichage électrochrome suivant la revendication 4, **caractérisé en ce qu'**on utilise comme adhésif photodurcissant un adhésif du type acrylate durcissant par voie photochimique ou un adhésif du type époxy durcissant par voie photochimique ou durcissant après amorçage photochimique à la température ambiante.

6. Dispositif d'affichage électrochrome suivant l'une des revendications 1 à 5, **caractérisé en ce que** le milieu électrochrome contient au moins une paire de substances redox dont l'une est réductible et l'autre est oxydable, toutes deux étant incolores ou n'étant que faiblement colorées et, après l'application d'une tension au dispositif électrochrome, l'une des substances est réduite et l'autre est oxydée, l'une au moins devenant alors colorée et, après mise hors-tension, les deux substances redox initiales se reforment et le dispositif électrochrome se décolore.

7. Dispositif d'affichage électrochrome suivant l'une des revendications 1 à 6, dans lequel le milieu électrochrome est une substance électrochrome de formule

$$Y\text{-}[\text{-}B\text{-}Z\text{-})_a\text{-}(\text{-}B\text{-}Y\text{-})_b\text{-}]_c\text{-}B\text{-}Z \quad \text{(I)}$$

dans laquelle

Y et Z représentent, indépendamment l'un de l'autre, un reste $OX_2$ ou $RED_1$, mais au moins un Y représente $OX_2$ et au moins un Z représente $RED_1$,
$OX_2$ représentant le reste de formule (IIa)

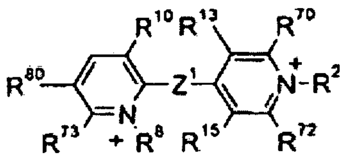

(IIa)

2 X-

dans laquelle
$R^2$ et $R^8$ représentent, indépendamment l'un de l'autre, un reste alkyle en $C_1$ à $C_{18}$, alcényle en $C_2$ à $C_{12}$, cycloalkyle en $C_4$ à $C_7$, aralkyle en $C_7$ à $C_{15}$ ou aryle en $C_6$ à $C_{10}$,
$R^{15}$ représente l'hydrogène,
$R^{10}$ ; $R^{13}$ représentent, indépendamment l'un de l'autre, l'hydrogène ou s'apparient pour former un pont $-(CH_2)_2-$, $-(CH_2)_3-$ ou -CH=CH-,
$R^{70}$, $R^{72}$, $R^{73}$ et $R^{80}$ représentent, indépendamment les uns des autres, l'hydrogène ou un reste alkyle en $C_1$ à $C_6$,
$R^{70}$; $R^{13}$ et/ou $R^{73}$ ; $R^{80}$ forment ensemble un pont -CH=CH-CH=CH-,
$Z^1$ représente une liaison directe, -CH=CH-, $-C(CH_3)=CH-$, -C(CN)=CH-, -CCl=CCl-, -C(OH)=CH-, -C≡C-, -CH=N-N=CH-, $-C(CH_3)=N-N=C(CH_3)-$ ou -CCl=N-N=CCl-, et
$X^-$ représente un anion
ou bien $OX_2$ représente le reste de formule (V)

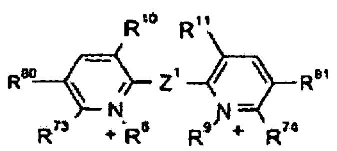

(V)

2X-

dans laquelle
$R^8$ et $R^9$ représentent, indépendamment l'un de l'autre, un reste alkyle en $C_1$ à $C_{18}$, alcényle en $C_2$ à $C_{12}$, cycloalkyle en $C_4$ à $C_7$, aralkyle en $C_7$ à $C_{15}$ ou aryle en $C_6$ à $C_{10}$,

$R^{10}$; $R^{11}$ représentent, indépendamment l'un de l'autre, l'hydrogène ou s'apparient pour former un pont $-(CH_2)_2-$, $-(CH_2)_3-$ ou -CH=CH-,
$R^{73}$; $R^{80}$ et/ou $R^{74}$; $R^{81}$ forment ensemble un pont -CH=CH-CH=CH-,
$Z^1$ représente une liaison directe, -CH=CH-, $-C(CH_3)=CH-$, -C(CN)=CH-, -CCl=CCl-, -C(OH)=CH-, -CC1=CH-, -C≡C-, -CH=N-N=CH-, $-C(CH_3)=N-N=C(CH_3)-$ ou -CCl=N-N=CCl-, et
$X^-$ représente un anion,
$RED_1$ représente le reste d'un système redox électrochimiquement oxydable de façon réversible,
B représente un élément de pont, la liaison des restes des formules (IIa) ou (V) au pont B s'effectuant par l'intermédiaire de l'un des restes $R^2$, $R^8$ et/ou $R^9$ et ces restes représentant alors une liaison directe,
c représente un nombre entier de 0 à 1000 et
a et b comprennent, indépendamment l'un de l'autre, un nombre entier dans la plage de 0 à 100.

**8.** Dispositif d'affichage électrochrome suivant l'une des revendications 1 à 6, dans lequel le milieu électrochrome représente une substance électrochrome de formules

$OX_2$-B-$RED_1$ (Ia),

$OX_2$-B-$RED_1$-B-$OX_2$ (Ib),

$RED_1$-B-$OX_2$-B-$RED_1$ (Ic),

ou

$OX_2$-(B-$RED_1$-B-$OX_2$)$_d$-B-$RED_1$ (Id)

dans lesquelles

$OX_2$, $RED_1$ et B ont la définition indiquée dans la revendication 7 et
d est un nombre entier de 1 à 5.

**9.** Dispositif d'affichage électrochrome suivant la revendication 7 ou 8, dans lequel

$OX_2$, a, b, c et d possèdent la définition indiquée dans les revendications 7 et 8,
$RED_1$ représente un reste de formules

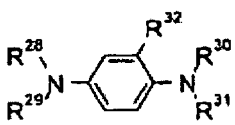

(X),

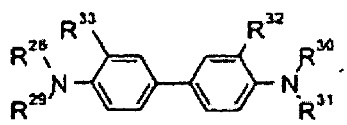

(XI),

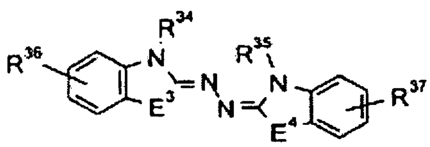

(XII),

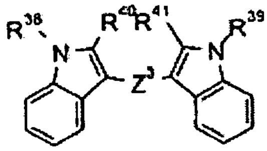

(XIII),

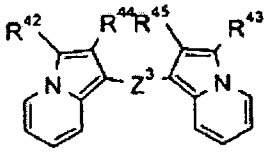

(XIV),

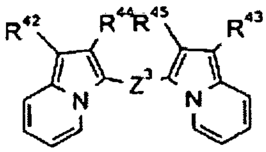

(XV),

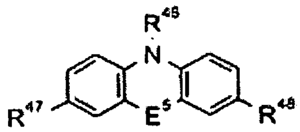

(XVI),

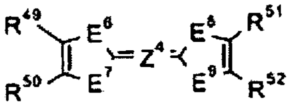

(XVII),

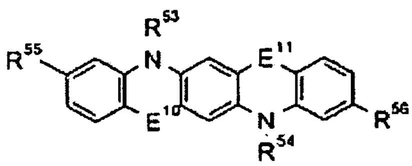

(XVIII),

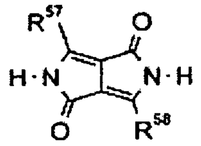

(XIX),

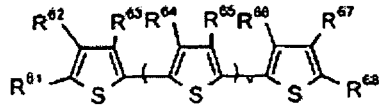

(XX),

dans lequelles

$R^{28}$ à $R^{31}$, $R^{34}$, $R^{35}$, $R^{38}$, $R^{39}$ , $R^{46}$ , $R^{53}$ et $R^{54}$ représentent, indépendamment les uns des autres, un reste alkyle en $C_1$ à $C_{18}$, alcényle en $C_2$ à $C_{12}$, cycloalkyle en $C_4$ à $C_7$, aralkyle en $C_7$ à $C_{15}$ ou aryle en $C_6$ à $C_{10}$,

$R^{32}$ , $R^{33}$, $R^{36}$, $R^{37}$ , $R^{41}$ , $R^{41}$, $R^{42}$ à $R^{45}$, $R^{47}$ , $R^{48}$, $R^{49}$ à $R^{52}$ et $R^{55}$ à $R^{58}$ représentent, indépendamment les uns des autres, l'hydrogène, un reste alkyle en $C_1$ à $C_4$, alkoxy en $C_1$ à $C_4$, halogéno, cyano, nitro, (alkoxy en $C_1$ à $C_4$)-carbonyle, aryle en $C_6$ à $C_{10}$,

et

$R^{57}$ et $R^{58}$ représentent en outre un noyau hétérocyclique aromatique ou quasi-aromatique pentagonal ou hexagonal qui est éventuellement condensé au benzène et $R^{48}$ représente en outre un groupe $NR^{75}R^{76}$, ou bien $R^{49}$ ; $R^{50}$ et/ou $R^{51}$; $R^{52}$ forment un pont $-(CH_2)_3-$, $-(CH_2)_4-$, $-(CH_2)_5-$ ou -CH=CH-CH=CH-,

$Z^3$ représente une liaison directe, un pont -CH=CH-ou -N=N-,

$=Z^4=$ représente une double liaison directe, un pont =CH-CH= ou =N-N=,

$E^3$ à $E^5$, $E^{10}$ et $E^{11}$ représentent, indépendamment les uns des autres, O, S, $NR^{59}$ ou $C(CH_3)_2$ et

$E^5$ représente en outre C=O ou $SO_2$,

$E^3$ et $E^4$ peuvent en outre représenter, indépendamment l'un de l'autre, -CH=CH-,

$E^6$ à $E^9$ représentent, indépendamment l'un de l'autre, S, Se ou $NR^{59}$,

$R^{59}$ ; $R^{75}$ et $R^{76}$ représentent, indépendamment les uns des autres, un reste alkyle en $C_1$ à $C_{18}$, alcényle en $C_2$ à $C_8$, cycloalkyle en $C_4$ à $C_7$, aralkyle en $C_7$ à $C_{15}$ ou aryle en $C_6$ à $C_{10}$,

et

$R^{75}$ représente en outre l'hydrogène, ou bien $R^{75}$ et $R^{76}$ représentent dans la définition de $NR^{75}$ $R^{76}$, conjointement avec l'atome N auquel ils sont liés, un noyau pentagonal ou hexagonal qui contient éventuellement d'autres hétéroatomes,

$R^{61}$ à $R^{68}$ représentent, indépendamment les uns des autres, l'hydrogène, un reste alkyle en $C_1$ à $C_6$, alkoxy en $C_1$ à $C_4$, cyano, (alkoxy en $C_1$ à $C_4$) -carbonyle ou aryle en $C_6$ à $C_{10}$, et

$R^{61}$ ; $R^{12}$ et $R^{67}$; $R^{68}$ forment en outre, indépendamment les uns des autres, un pont - $(CH_2)_3$-, - $(CH_2)_4$ - ou -CH=CH-CH=CH-, ou bien,

$R^{62}$ ; $R^{63}$, $R^{64}$; $R^{65}$ et $R^{66}$ ; $R^{67}$ forment un pont $-O-CH_2CH_2-O-$ou $-O-CH_2CH_2CH_2-O-$,

v représente un nombre entier entre 0 et 10000, la liaison à l'élément de pont B s'effectuant par l'intermédiaire de l'un des restes $R^2$, $R^8$, $R^9$, $R^{28}$ à $R^{58}$, $R^{61}$, $R^{62}$, $R^{67}$, $R^{68}$ ou bien, au cas où l'un des restes $E^1$ ou $E^2$ représente $NR^1$ ou l'un des restes $E^3$ à $E^{11}$ représente $NR^{59}$, elle s'effectue par l'intermédiaire de $R^1$ ou respectivement $R^{59}$ et les restes mentionnés représentent alors une liaison directe,

B représente un pont de formules - $-(CH_2)_n-$ ou - $[Y^1s(CH_2)_m-Y^2]_o-(CH_2)_p-Y^3{}_q-$, qui peut être substitué par un reste alkyle en $C_1$ à $C_4$, alkoxy en $C_1$ à $C_4$, halogéno ou phényle,

$Y^1$ à $Y^3$ représentent, indépendamment les uns des autres, O, S, un reste $NR^{60}$, COO, CONH, NHCONH, cyclopentanediyle, cyclohexanediyle, phénylène ou naphtylène,

$R^{60}$ représente un reste alkyle en $C_1$ à $C_6$, alcényle en $C_2$ à $C_6$, cycloalkyle en $C_4$ à $C_7$, aralkyle en $C_7$ à $C_{15}$ ou aryle en $C_6$ à $C_{10}$,

n est un nombre entier de 1 à 12,

m et p représentent, indépendamment l'un de l'autre, un nombre entier de 0 à 8,

o est un nombre entier de 0 à 6 et

q et s ont, indépendamment l'un de l'autre, la valeur 0 ou 1.

**10.** Procédé de fabrication d'un dispositif d'affichage électrochrome tel que défini dans l'une des revendications 1 à 9,

**caractérisé en ce que** les segments bidimensionnels et leurs amenées sont tout d'abord ébauchés dans un revêtement conducteur plan ou bien ils sont déposés sur les plaques ou les feuilles puis la couche d'isolation électrique est déposée sur les amenées.

**11.** Procédé de fabrication d'un dispositif d'affichage électrochrome suivant la revendication 10, **caractérisé en ce qu'**un adhésif ou un vernis est déposé comme couche d'isolation électrique sur les amenées et est durci après avoir été déposé.

**12.** Procédé de fabrication d'un dispositif d'affichage électrochrome suivant la revendication 11, **caractérisé en ce qu'**un adhésif durcissant sous l'effet de la lumière est appliqué sur le côté de la plaque ou feuille porteur du revêtement conducteur, les surfaces des amenées sont exposées à la lumière, ce qui fait durcir l'adhésif aux endroits exposés, puis l'adhésif non durci aux endroits non exposés à la lumière est enlevé.

**13.** Procédé de fabrication d'un dispositif d'affichage électrochrome suivant l'une des revendications 6 à 9, dans lequel les amenées sont constituées de métal, **caractérisé en ce que** les amenées métalliques sont oxydées en surface pour produire la couche d'isolation électrique.

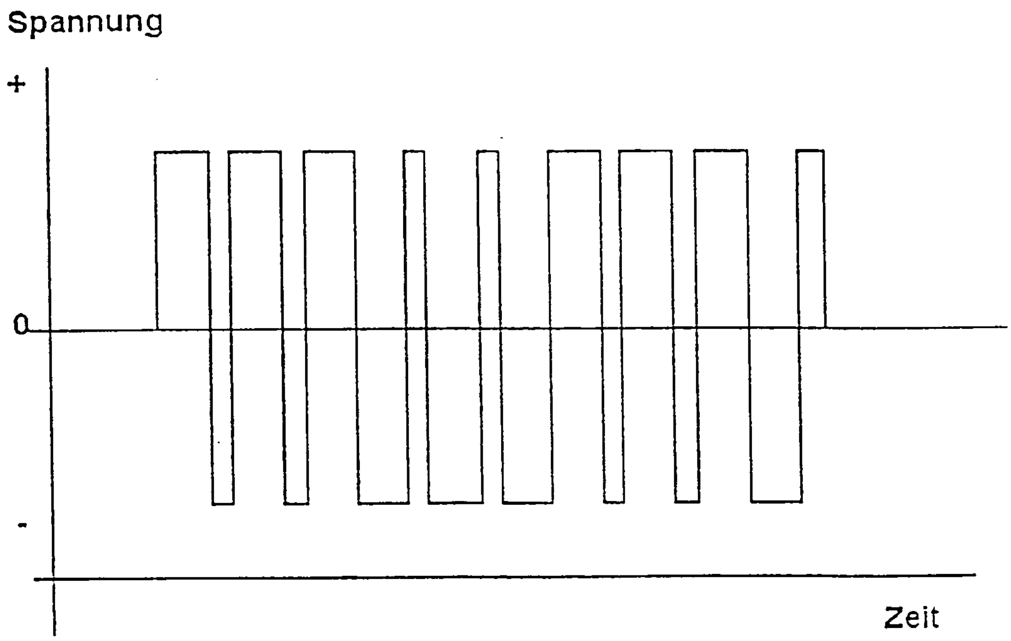


Fig. 1

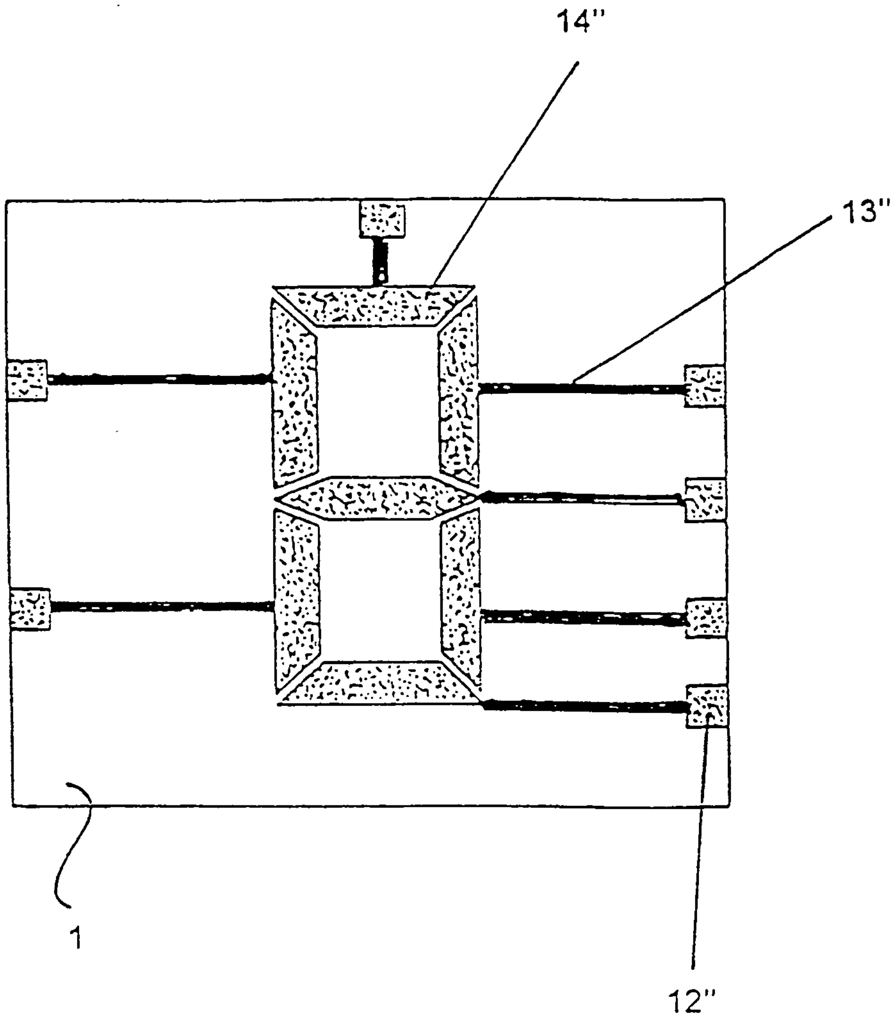


Fig. 2

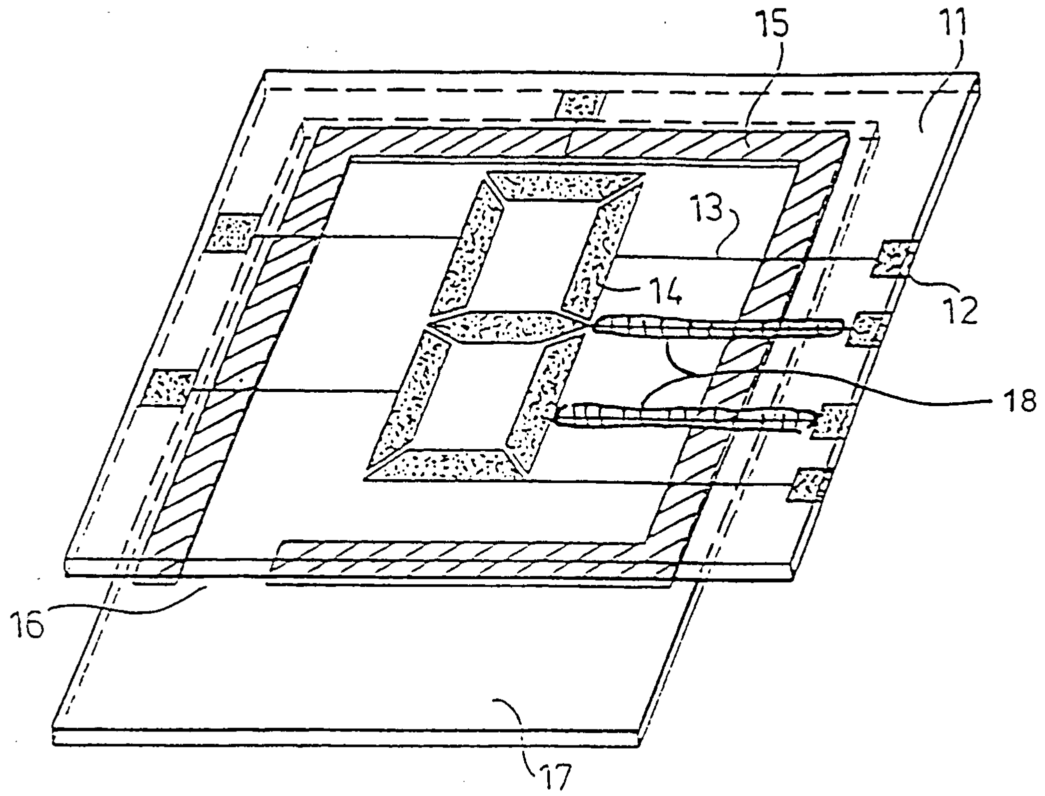


Fig. 3(a)

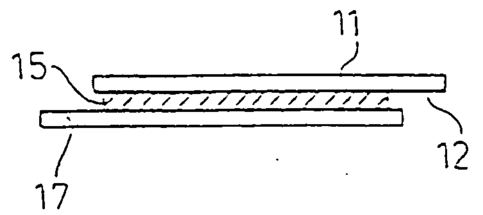


Fig. 3(b)

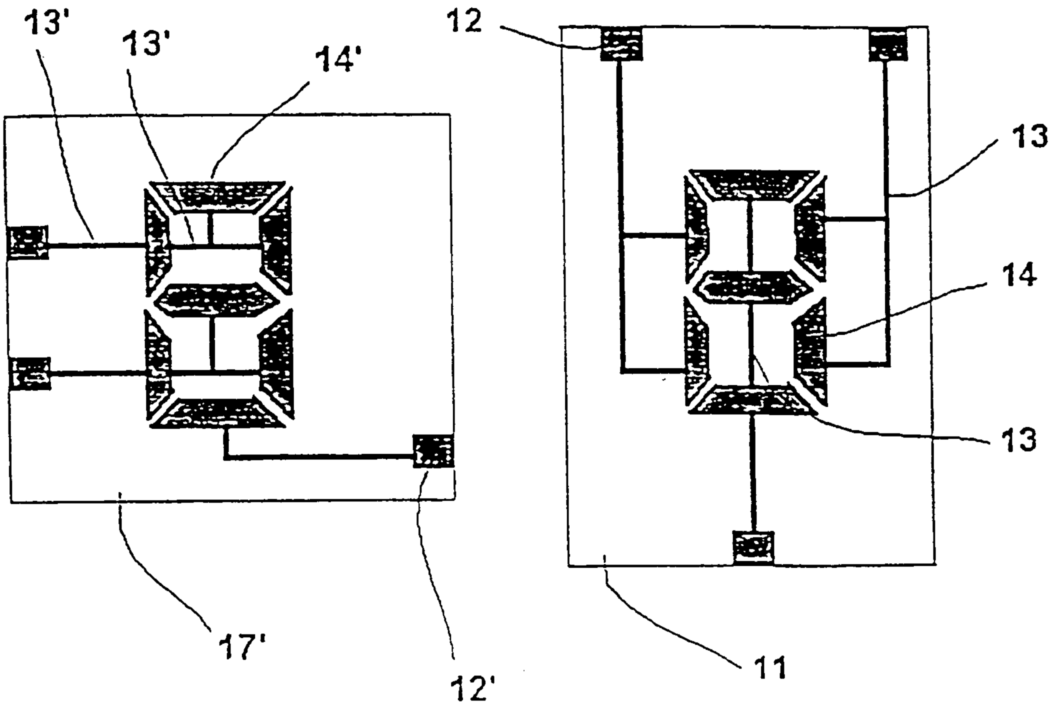


Fig. 4

Figur 5

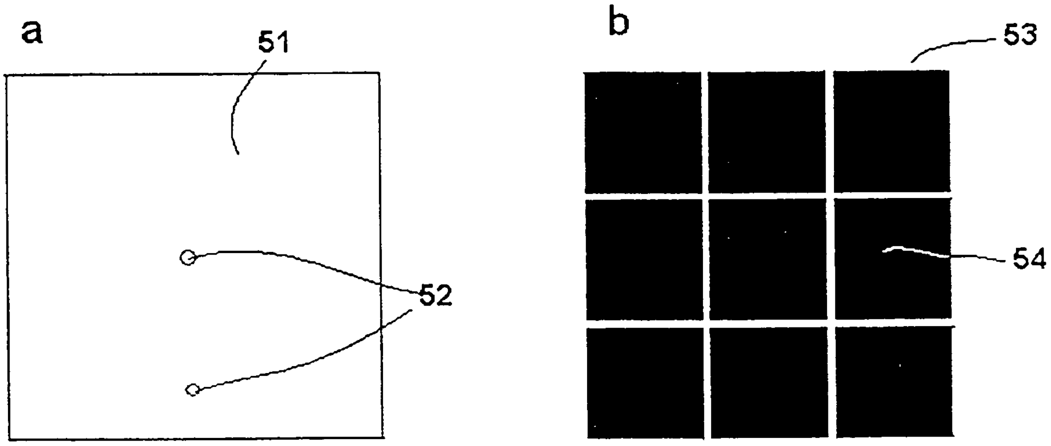

Figur 6

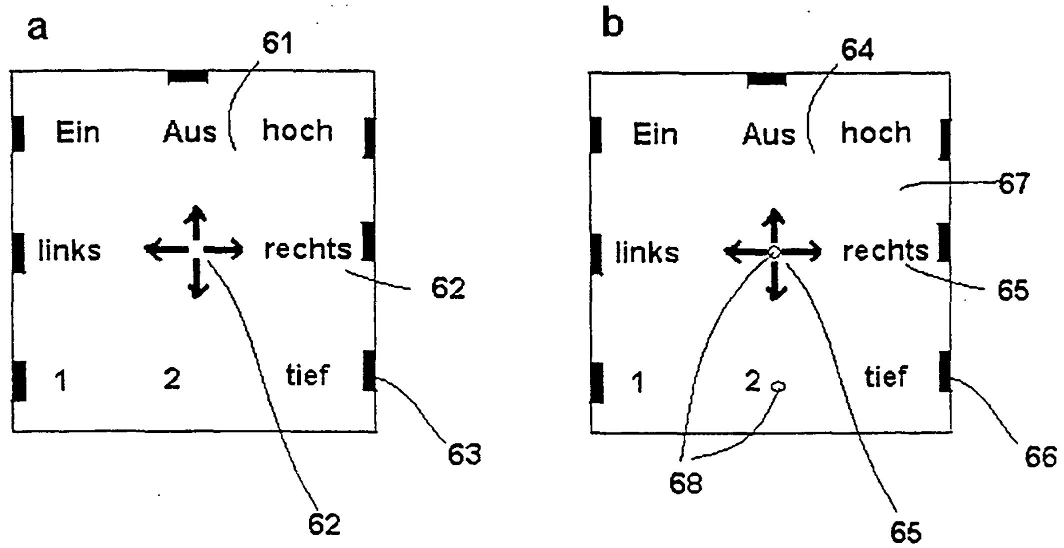
a
61
Ein
Aus
hoch
links
rechts
62
1
2
tief
63
62
b
64
Ein
Aus
hoch
67
links
rechts
65
1
2
tief
66
68
65

Figur 7

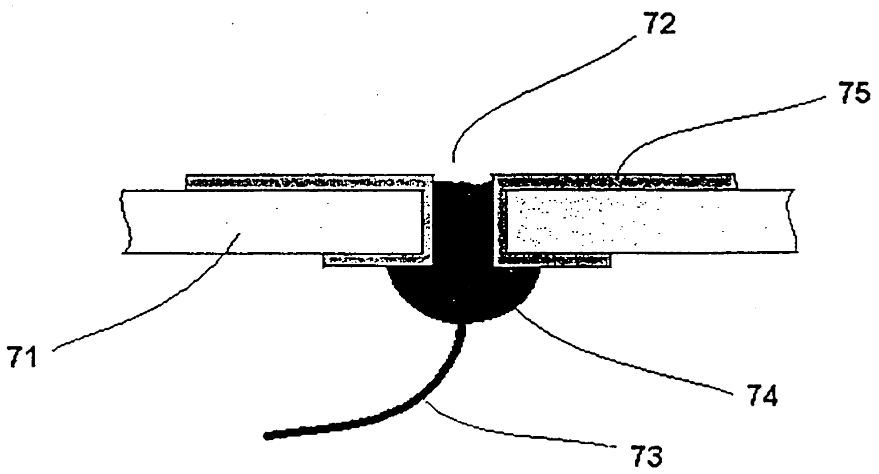

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9423333 A
- US 4902108 A
- US 5140455 A
- US 3280701 A
- EP 0435689 A
- DE 19631728
- US 4086003 A
- US 4188095 A
- WO 9730134 A
- WO 9730135 A
- DE OS3917323 A
- DE OS4435211 A
- EP 476456 A
- EP 476457 A
- DE OS4007058 A


### In der Beschreibung aufgeführte Nicht-Patentliteratur


- **D. THEIS.** Ullmann's Encyclopedia of Industrial Chemistry. Verlag Chemie, 1987, vol. A8, 622
- *Aus Elektrokhimiya,* 1977, vol. 13, 32-37
- *AUS ELEKTROKHIMIYA,* vol. 13, 404-408
- *AUS ELEKTROKHIMIYA,* 1978, vol. 14, 319-322
- *Topics in Current Chemistry,* 1980, vol. 92, 1-44
- **J. W. MUSKOPF ; S. B. MCCOLLISTER.** Ullmann's Encyclopedia of Organic Chemistry. VCH Verlagsgesellschaft, 1987, vol. A 9, 547 ff
- **W. DIERICHS et al.** Ullmann's Encyklopädie der technischen Chemie. VCH Verlagsgesellschaft, 1977, vol. 14, 233 ff
- Applied Polymer Science. 1985, 931-961
- **D.THEIS.** Ullmann's Encyclopedia of Industrial Chemistry. Verlag Chemie, 1987, vol. A8, 622
- *Angew. Chem.,* 1978, vol. 90, 927
- *Adv. Mater.,* 1991, vol. 3, 225
- *J. Am. Chem. Soc.,* 1995, vol. 117, 8528
- *J. C. S. Perkin II,* 1990, 1777
- *J. Org. Chem.,* 1992, vol. 57, 1849
- *J. Am. Chem. Soc.,* 1977, vol. 99, 6120, 6122
- *Current Chemistry,* 1980, vol. 92, 1-44